# EUROPEAN PATENT APPLICATION

(11) **EP 4 787 114 A1**
(43) Date of publication of application: **05.08.2026**
(21) Application number: 26152657.8
(22) Date of filing: 19.01.2026
(51) Int. Cl.: G05D 1/648, A01B 69/04

(54) **PATH GENERATION METHOD, PATH GENERATION PROGRAM, PATH GENERATION SYSTEM, AND AUTOMATIC TRAVEL METHOD**

(30) Priority: 29.01.2025 JP 2025012960
(71) Applicant: Yanmar Holdings Co., Ltd., Osaka-shi, Osaka (JP)
(72) Inventor: NISHII, Yasuto, Okayama (JP); NISHIBEPPU, Shinya, Okayama (JP); TAKAHASHI, Mamoru, Okayama (JP); YAMAGUCHI, Yuji, Okayama (JP); MURAYAMA, Masaaki, Okayama (JP)
(74) Representative: Isarpatent

(57) **Abstract**

[Problem] Provided are a path generation method, a path generation program, a path generation system, and an automatic travel method capable of improving work efficiency in a case where work paths are connected at an obtuse angle.

[Solution] The path generation method includes generating a target path including a first work path and a second work path following the first work path and causing a work vehicle to automatically travel. The path generation method includes, in a case where an angle formed between the first work path and the second work path is larger than 90 degrees and smaller than 180 degrees, setting either one of a first mode for generating a target path including a backward path at a connection portion between the first work path and the second work path and a second mode for generating a target path not including the backward path at the connection portion.

## Description

### TECHNICAL FIELD

The present invention relates to a technique for generating a path on which a work vehicle travels automatically.

### BACKGROUND ART

Conventionally, a work vehicle (for example, a combine) that performs reaping work while automatically traveling along a preset target path in a field has been known (for example, see Patent Document 1). For example, in a case where a first work path and a next second work path are connected at a right angle, after finishing work on the first work path, the work vehicle travels on a turning path including a backward path at a connection portion between the first work path and the second work path and moves to the second work path.

### PRIOR ART DOCUMENT

### PATENT DOCUMENT

Patent Document 1: JP-A-2024-81109

### SUMMARY OF INVENTION

### TECHNICAL PROBLEM

By the way, in a case where the first work path and the second work path are connected at an obtuse angle (an angle formed between the first work path and the second work path is larger than 90 degrees and smaller than 180 degrees), a distance over which the work vehicle travels backward at the connection portion becomes long, which causes a problem of deterioration in work efficiency.

An object of the present invention is to provide a path generation method, a path generation program, a path generation system, and an automatic travel method capable of improving work efficiency in a case where work paths are connected at an obtuse angle.

### SOLUTION TO PROBLEM

A path generation method according to the present invention is a method for generating a target path including a first work path and a second work path following the first work path and causing a work vehicle to automatically travel. The path generation method includes, in a case where an angle formed between the first work path and the second work path is larger than 90 degrees and smaller than 180 degrees, setting either one of a first mode for generating a target path including a backward path at a connection portion between the first work path and the second work path and a second mode for generating a target path not including the backward path at the connection portion.

A path generation program according to the present invention is a program for generating a target path including a first work path and a second work path following the first work path and causing a work vehicle to automatically travel. The path generation program is a program for causing one or more processors to, in a case where an angle formed between the first work path and the second work path is larger than 90 degrees and smaller than 180 degrees, set either one of a first mode for generating a target path including a backward path at a connection portion between the first work path and the second work path and a second mode for generating a target path not including the backward path at the connection portion.

A path generation system according to the present invention is a system for generating a target path including a first work path and a second work path following the first work path and causing a work vehicle to automatically travel. In a case where an angle formed between the first work path and the second work path is larger than 90 degrees and smaller than 180 degrees, the path generation system sets either one of a first mode for generating a target path including a backward path at a connection portion between the first work path and the second work path and a second mode for generating a target path not including the backward path at the connection portion.

An automatic travel method according to the present invention is a method for causing a work vehicle to automatically travel along a target path including a first work path and a second work path following the first work path. The automatic travel method includes, in a case where an angle formed between the first work path and the second work path is larger than 90 degrees and smaller than 180 degrees, selecting either one of a first travel mode for causing the work vehicle to travel on a target path including a backward path at a connection portion between the first work path and the second work path and a second travel mode for causing the work vehicle to travel on a target path not including the backward path at the connection portion.

### ADVANTAGEOUS EFFECTS OF INVENTION

According to the present invention, it is possible to provide a path generation method, a path generation program, a path generation system, and an automatic travel method capable of improving work efficiency when work paths are connected at an obtuse angle.

### BRIEF DESCRIPTION OF DRAWINGS

Fig. 1 is a functional block diagram showing a configuration of a traveling system according to an embodiment of the present invention;
Fig. 2 is an external view showing a configuration of a combine according to the embodiment of the present invention;
Fig. 3 is a diagram showing an example of a target path set in a field according to the embodiment of the present invention;
Fig. 4A is a diagram showing an example of a work procedure of the combine according to the embodiment of the present invention;
Fig. 4B is a diagram showing an example of a work procedure of the combine according to the embodiment of the present invention;
Fig. 4C is a diagram showing an example of a work procedure of the combine according to the embodiment of the present invention;
Fig. 5A is a diagram showing an example of corner reaping work by the combine according to the embodiment of the present invention;
Fig. 5B is a diagram showing an example of corner reaping work by the combine according to the embodiment of the present invention;
Fig. 6A is a diagram showing an example of an operation screen displayed on an operation terminal according to the embodiment of the present invention;
Fig. 6B is a diagram showing an example of a path creation result screen displayed on the operation terminal according to the embodiment of the present invention;
Fig. 7A is a diagram showing a specific example of a position (a non-working height) of a reaping unit of the combine according to the embodiment of the present invention;
Fig. 7B is a diagram showing a specific example of a position (an intermediate height) of the reaping unit of the combine according to the embodiment of the present invention;
Fig. 7C is a diagram showing a specific example of a position (a working height) of the reaping unit of the combine according to the embodiment of the present invention;
Fig. 8A is a diagram showing a specific example of reaping work in an outermost peripheral area in the combine according to the embodiment of the present invention;
Fig. 8B is a diagram showing a specific example of reaping work in the outermost peripheral area in the combine according to the embodiment of the present invention;
Fig. 8C is a diagram showing a specific example of reaping work in the outermost peripheral area in the combine according to the embodiment of the present invention;
Fig. 8D is a diagram showing a specific example of reaping work in the outermost peripheral area in the combine according to the embodiment of the present invention;
Fig. 8E is a diagram showing a specific example of reaping work in the outermost peripheral area in the combine according to the embodiment of the present invention;
Fig. 8F is a diagram showing a specific example of turning travel in the outermost peripheral area in the combine according to the embodiment of the present invention;
Fig. 9 is a diagram showing a state in which the reaping work in the outermost peripheral area of the field according to the embodiment of the present invention has been completed;
Fig. 10 is a diagram showing an example of an unworked area in an inner peripheral area of the field according to the embodiment of the present invention;
Fig. 11A is a diagram showing an example of a travel method in a first mode according to the embodiment of the present invention;
Fig. 11B is a diagram showing an example of a travel method in the first mode according to the embodiment of the present invention;
Fig. 11C is a diagram showing an example of a travel method in the first mode according to the embodiment of the present invention;
Fig. 12 is a diagram showing an example of a target path in the first mode according to the embodiment of the present invention;
Fig. 13 is a diagram showing an example of a target path in a second mode according to the embodiment of the present invention;
Fig. 14A is a diagram showing an example of a setting screen displayed on the operation terminal according to the embodiment of the present invention;
Fig. 14B is a diagram showing a connection allowable angle according to the embodiment of the present invention;
Fig. 15A is a diagram showing an example of a target path in the first mode according to the embodiment of the present invention;
Fig. 15B is a diagram showing an example of a target path in the second mode according to the embodiment of the present invention;
Fig. 16 is a flowchart showing an example of a procedure of generation processing of a target path executed by the traveling system according to the embodiment of the present invention;
Fig. 17A is a diagram showing an example of a setting method of a target position (front gaze point) in the first mode according to the embodiment of the present invention;
Fig. 17B is a diagram showing an example of a setting method of a target position (front gaze point) in the second mode according to the embodiment of the present invention; and
Fig. 18 is a diagram showing an example of a generation method of a dividing path according to the embodiment of the present invention.

### DESCRIPTION OF EMBODIMENTS

The following embodiment is an example that embodies the present invention, and is not intended to limit the technical scope of the present invention.

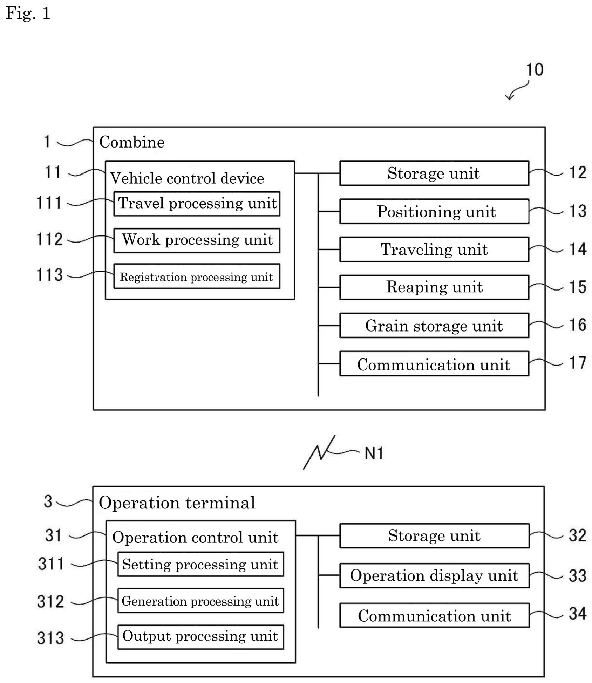

A combine 1 will be described as an example of a work vehicle of the present invention. As shown in Fig. 1, a traveling system 10 according to an embodiment of the present invention includes the combine 1 and an operation terminal 3. The combine 1 and the operation terminal 3 can communicate with each other via a communication network N1. For example, the combine 1 and the operation terminal 3 can communicate with each other via a mobile phone network, a packet network, or a wireless LAN.

The combine 1 is a work vehicle that performs agricultural work such as reaping in a field. The combine 1 performs work while traveling, and transmits GNSS information from a GNSS antenna mounted on the combine 1, that is, a vehicle position of the combine 1, to the operation terminal 3 as measurement point data.

In addition, the combine 1 can automatically travel along a preset target path. Note that the combine 1 may be configured to manually travel in some areas of the field (for example, the outermost peripheral area) and automatically travel in other areas (for example, the inner peripheral area). Moreover, the combine 1 may also be configured to receive various types of setting information from the operation terminal 3 and automatically travel according to the setting information.

The operation terminal 3 is a portable terminal capable of remotely operating the combine 1, and includes, for example, a tablet terminal, a laptop personal computer, a smartphone, or the like. Note that an operation device similar to the operation terminal 3 may be mounted on the combine 1.

A user (operator) can use the operation terminal 3 to perform setting operations for various setting items (for example, setting of an automatic travel path). The operation terminal 3 also displays information such as a work status and a traveling status of the combine 1 during automatic travel. The operator can ascertain the work status and the traveling status on the operation terminal 3.

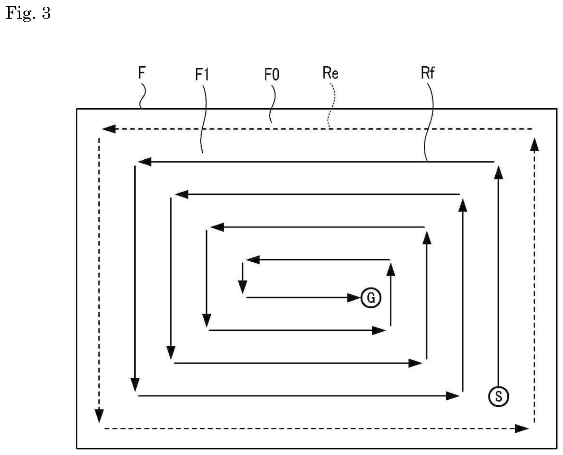

Fig. 3 shows an example of a target path R set for a field F. For example, within the field F, the combine 1 performs reaping work while traveling along an outermost peripheral path Re in an outermost peripheral area F0 on a boundary side of the field F, and performs reaping work while traveling along an inner peripheral path Rf in an inner peripheral area F1 inside the outermost peripheral area F0. The target path R includes the outermost peripheral path Re and the inner peripheral path Rf. The combine 1 may travel and perform reaping work on the outermost peripheral path Re in response to manual operation (manual steering) by the operator, and may perform reaping work while automatically traveling on the inner peripheral path Rf. The combine 1 may also perform reaping work while automatically traveling on the outermost peripheral path Re and the inner peripheral path Rf.

**In** the present embodiment, an example of a configuration will be described in which the combine 1 travels and performs reaping work (corner reaping work) on at least a part of the outermost peripheral path Re (corners and edges of the field F) in response to the manual operation by the operator, and performs reaping work while automatically traveling along the inner peripheral path Rf (automatic travel path) in the inner peripheral area F1 from a start position S (automatic travel start position) to an end position G (automatic travel end position). Note that Fig. 3 shows a work method in which the combine 1 performs reaping work while traveling in a circular motion from the outer periphery to the inner periphery from the start position S to the end position G ("circular reaping"). However, as another embodiment, a work method in which a combine 1 performs reaping work while traveling back and forth from a start position S to an end position G ("reciprocating reaping") may be employed.

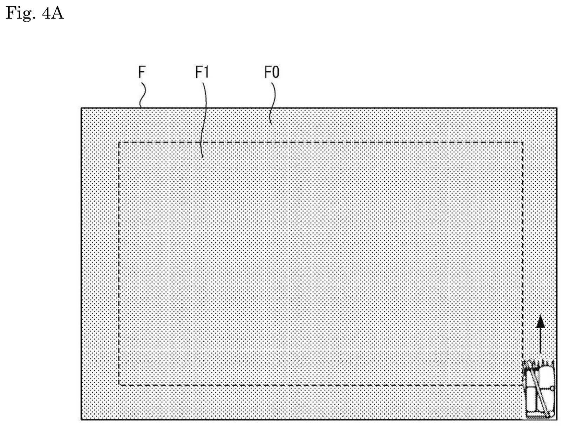

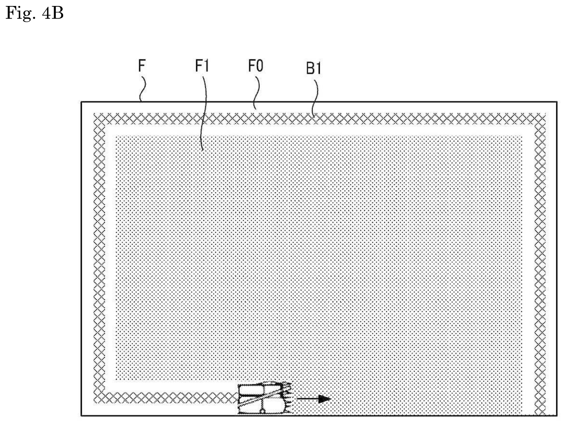

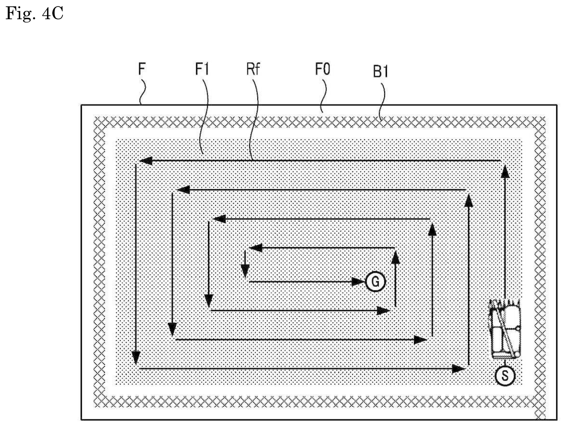

An example of a work procedure of the combine 1 will be described with reference to Fig. 4. First, as shown in Fig. 4A, the combine 1 starts traveling in response to an operation of the operator at a predetermined position (for example, a corner) of the field F, and then travels in the outermost peripheral area F0 along the outer periphery of the field F while reaping grain stalks. In addition, after threshing the reaped grain stalks, the combine 1 discharges waste straw such as straw chips to the outside from the rear of a machine body. As a result, as shown in Fig. 4B, waste straw B1 is piled up in the wake of the combine 1, and a waste straw row is formed on the path where the combine 1 has finished its reaping work. Note that the combine 1 is set up to discharge the waste straw of the reaped grain stalks to the position of the grain stalks to be reaped, and is configured to be able to ascertain the position, the width (the lateral width of the waste straw row in a left-right direction), the length, and the like of the waste straw B1. For example, the waste straw B1 is discharged with a width narrower than the lateral width of the machine body, based on the center of the combine 1 in the left-right direction.

When the combine 1 finishes reaping work in the outermost peripheral area F0, the combine 1 starts automatic travel and reaping work from the start position S in the inner peripheral area F1, as shown in Fig. 4C. The combine 1 performs reaping work while automatically traveling along the inner peripheral path Rf, and finishes the automatic travel and reaping work when the combine 1 reaches the end position G.

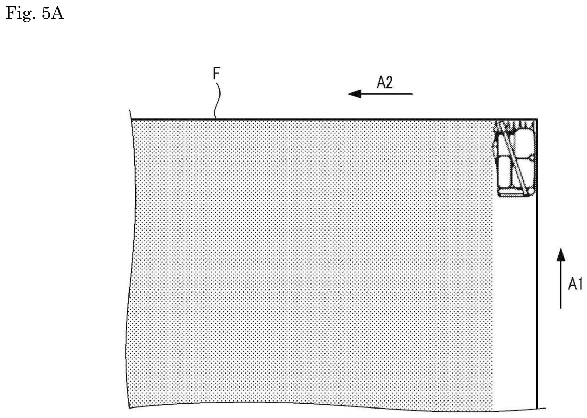

Here, the combine 1 changes direction (turns) at a corner of the field F in a case of performing reaping work. For example, as shown in Fig. 5A, in a case where the combine 1 performs reaping work on one side of the field (the right side of Fig. 5A) in an A1 direction and then performs reaping work on the other side of the field (the upper side of Fig. 5A) in an A2 direction, the orientation of the combine 1 is changed from the A1 direction to the A2 direction at the corner (the upper right corner of Fig. 5A). In this way, the combine 1 needs a turning area at each corner of the field F to move (turn) to the next path.

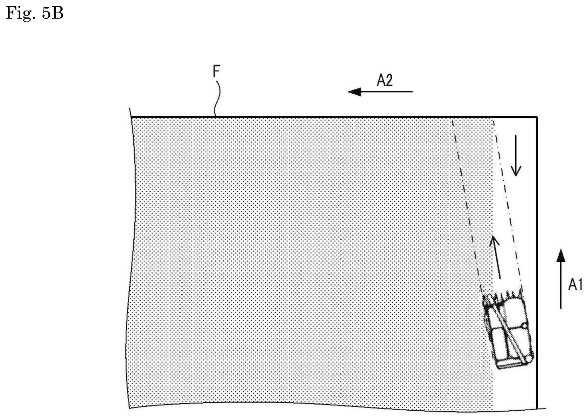

In order to generate the turning area, as shown in Fig. 5B, when the combine 1 finishes reaping work in the A1 direction (see Fig. 5A), the combine 1 moves backward to a predetermined position and stops, and then changes its direction of travel at the corner and moves forward to perform reaping work in a diagonal direction. The combine 1 repeatedly moves forward and backward until an area is secured in which the orientation of the vehicle body can be changed in the A2 direction, thereby performing reaping work at a corner (hereinafter referred to as corner reaping work).

### [Operation terminal 3]

As shown in Fig. 1, the operation terminal 3 is an information processing device including an operation control unit 31, a storage unit 32, an operation display unit 33, a communication unit 34, and the like. The operation terminal 3 includes, for example, a tablet terminal.

The communication unit 34 is a communication interface for connecting the operation terminal 3 to the communication network N1 in a wired or wireless manner and for executing data communication according to a predetermined communication protocol with an external device such as one or more combines 1 via the communication network N1.

The operation display unit 33 is a user interface including a display unit such as a liquid crystal display or an organic EL display that displays various types of information, and an operation unit such as a touch panel, a mouse, or a keyboard that receives an operation. The operator can operate the operation unit to register various types of setting information on a setting screen (not shown) displayed on the display unit. In addition, the operator can operate the operation unit to issue an automatic traveling instruction to the combine 1. Moreover, the operator can ascertain the traveling state of the combine 1 traveling automatically within the field F from a travel trajectory displayed on the operation terminal 3 at a location away from the combine 1. In addition, the operator can ascertain the work status displayed on the operation terminal 3 at a location away from the combine 1.

The storage unit 32 is a non-volatile storage unit such as a hard disk drive (HDD), a solid state drive (SSD), or a flash memory that stores various types of information. The storage unit 32 stores a control program for causing the operation control unit 31 to execute predetermined processing. For example, the control program is recorded in a non-transitory manner on a computer-readable recording medium such as a flash ROM, an EEPROM, a CD, or a DVD, and is read by a predetermined reading device (not shown) provided in the operation terminal 3 and stored in the storage unit 32. Note that the control program may be downloaded from a server (not shown) to the operation terminal 3 via the communication network N1 and stored in the storage unit 32. The storage unit 32 may also store work information transmitted from the combine 1.

In addition, a dedicated application for causing the combine 1 to automatically travel is installed in the storage unit 32. The operation control unit 31 activates the dedicated application and performs setting processing of various types of setting information related to the combine 1, issues automatic traveling instructions to the combine 1, and the like.

The operation control unit 31 includes control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory for various types of processing executed by the CPU. The operation control unit 31 controls the operation terminal 3 by executing, with the CPU, various control programs stored in advance in the ROM or the storage unit 32.

As shown in Fig. 1, the operation control unit 31 includes various processing units such as a setting processing unit 311, a generation processing unit 312, and an output processing unit 313. Note that the operation control unit 31 functions as the various processing units by executing, with the CPU, various types of processing according to the control programs. In addition, some or all of the processing units may include an electronic circuit. Note that the control program may be a program for causing a plurality of processors to function as the processing unit.

The setting processing unit 311 sets various types of setting information for the combine 1 to perform automatic travel. Specifically, the setting processing unit 311 sets field information related to the field F. The field information includes, for example, a shape, a size, and position information (coordinates and the like) of the outermost periphery of the field, measurement point data that constitutes the outermost periphery of the field, and a shape, a size, and position information (coordinates and the like) of the work area within the field where work is performed in the field F. The field information also includes an address of the field F, a registration name and a registration date of the field information, a registration name and a registration date of the work area within the field, and the like. The setting processing unit 311 receives an operation of the operator to register the field information and sets the field information.

In addition, the setting processing unit 311 sets a traveling speed (vehicle speed) of the combine 1. For example, the operator can set a straight vehicle speed, a turning vehicle speed, and a reverse vehicle speed during work and non-work times on the setting screen.

**In** addition to the above-described information, the setting processing unit 311 sets well-known information such as a type of combine 1 (the maximum number of reaping rows), a vehicle width, and a vehicle length. Moreover, the setting processing unit 311 executes processing of setting a generation mode (first mode or second mode) for generating a target path in a connection portion between work paths. A setting method of the generation mode will be described later.

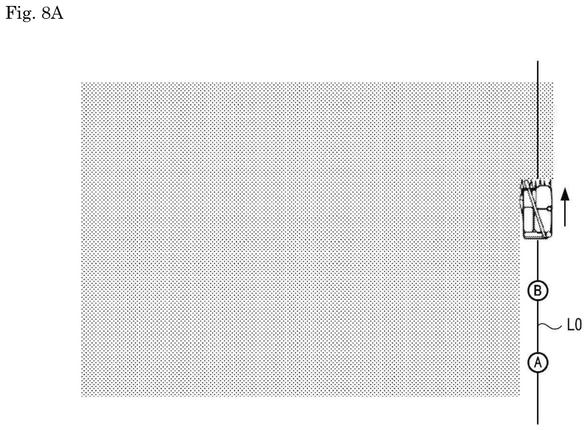

The generation processing unit 312 generates an automatic travel path for the combine 1 to perform predetermined work on a work target in the field F. Specifically, the generation processing unit 312 generates the target path R (outermost peripheral path Re and inner peripheral path Rf) including the work path and the turning path. For example, the generation processing unit 312 generates the outermost peripheral path Re in response to a registration operation performed by the operator during manual travel. For example, in a case where the operator operates to register two reference points (points A and B shown in Fig. 8A) when causing the combine 1 to travel straight in the outermost peripheral area F0 of the field F, the generation processing unit 312 sets a straight line (reference line L0) passing through the two reference points as the outermost peripheral path Re. The generation processing unit 312 sets the outermost peripheral path Re corresponding to each side of the outer periphery of the field F. The generation method of the outermost peripheral path Re is not limited thereto, and the generation processing unit 312 may generate a path parallel to the outer edges of the field F as the outermost peripheral path Re in a case where the shape of the field F has already been registered, or may create the outermost peripheral path Re based on the vehicle orientation when a predetermined operation is performed by the operator.

Note that, in a case where the shape of the field F has not been registered, the setting processing unit 311 may register the shape and the size of the field F based on the travel trajectory (measurement point data) acquired while the operator causes the combine 1 to manually travel and execute reaping work. In addition, the setting processing unit 311 may register the shape and the size of the field F based on the travel trajectory acquired while the operator causes the combine 1 to manually travel and execute reaping work along the outermost peripheral path Re.

The operator also selects a path pattern, a turning method (turning type), and the like on the setting screen (not shown). The path pattern includes "circular reaping", in which laps along the inner periphery of the inner peripheral area F1 are repeatedly performed while being shifted toward the center, and "reciprocating reaping", in which a plurality of passes is performed back and forth, and the operator selects either one of the path patterns. The turning type includes a "small turn" with a small turning radius, a "large turn (soft)" with a large turning radius, and a "standard" type between them, and the operator selects any one of the turning types. In addition, the operator can correct the turning radius on the setting screen. The operator also selects on the setting screen whether to perform corner reaping work in the field F.

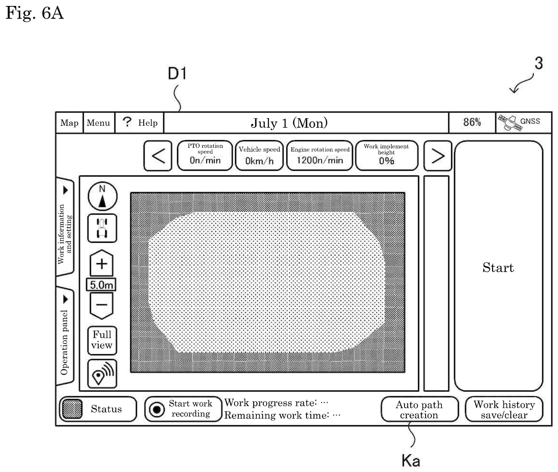

The generation processing unit 312 generates the inner peripheral path Rf (automatic travel path) from the start position S to the end position G based on information such as the field information, the path pattern, the turning type, the turning radius, whether corner reaping work is performed, and the generation mode (first mode or second mode to be described later). For example, when the operator presses a path generation button Ka ("auto path creation") on an operation screen D1 (see Fig. 6A) at the point in time when reaping work in the outermost peripheral area F0 has finished, the generation processing unit 312 generates the inner peripheral path Rf.

Note that the generation processing unit 312 may set the start position S to a current position of the combine 1 at the time of generating the inner peripheral path Rf, or may set the start position S to a position designated on the map by the operator.

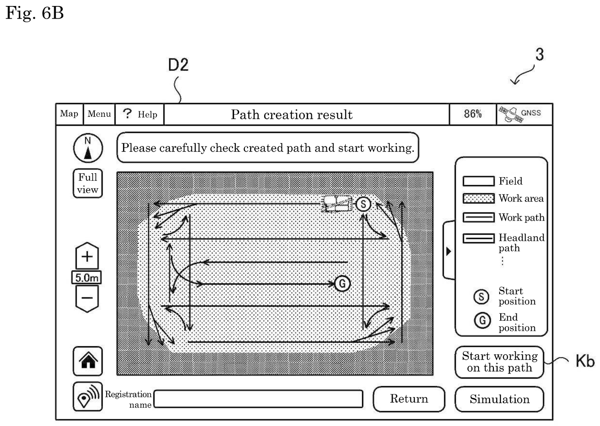

After generating the inner peripheral path Rf, the generation processing unit 312 causes the generated path information to be displayed on a path creation result screen D2 (see Fig. 6B). The generation processing unit 312 also registers the generated inner peripheral path Rf in association with the field F (registered field name). A specific example of the generation method of the target path R will be described later.

The output processing unit 313 outputs the various types of setting information set by the setting processing unit 311 to the combine 1. In addition, the output processing unit 313 outputs an automatic traveling start instruction (work start instruction) and an automatic traveling end instruction (work end instruction) to the combine 1 based on the operation of the operator.

For example, in a case where the combine 1 satisfies the automatic traveling start conditions, that is, a case where the position of the combine 1 is within a predetermined distance from the start position S, the orientation of the combine 1 is within a predetermined angle with respect to the orientation of the work path, and other automatic traveling start conditions are also satisfied, automatic travel is permitted. When the automatic travel is permitted, the operator can perform an automatic traveling start instruction operation on the operation terminal 3, and when the operation control unit 31 receives the automatic traveling start instruction operation from the operator, the output processing unit 313 outputs the automatic traveling start instruction to the combine 1. For example, in a case of starting automatic travel, the operator presses an automatic traveling start operation button Kb on the path creation result screen D2 (see Fig. 6B) or a start button on the operation screen D1 (see Fig. 6A).

When the vehicle control device 11 of the combine 1 acquires the automatic traveling start instruction from the operation terminal 3, the vehicle control device 11 causes the combine 1 to start automatic travel and reaping work, and execute automatic travel and reaping work along the inner peripheral path Rf from the start position S to the end position G. In addition, when the operation control unit 31 receives the automatic traveling stop instruction operation from the operator, the output processing unit 313 outputs the automatic traveling stop instruction to the combine 1. As a result, the vehicle control device 11 acquires the automatic traveling stop instruction from the operation terminal 3. When the vehicle control device 11 acquires the automatic traveling stop instruction, the vehicle control device 11 stops automatic travel and reaping work of the combine 1.

Note that the operation terminal 3 may be able to access a website (agricultural support site) of an agricultural support service provided by a server (not shown) via the communication network N1. In this case, the operation terminal 3 can function as an operation terminal of the server, by the operation control unit 31 executing a browser program. The server includes the above-described processing units and executes each piece of processing.

### [Combine 1]

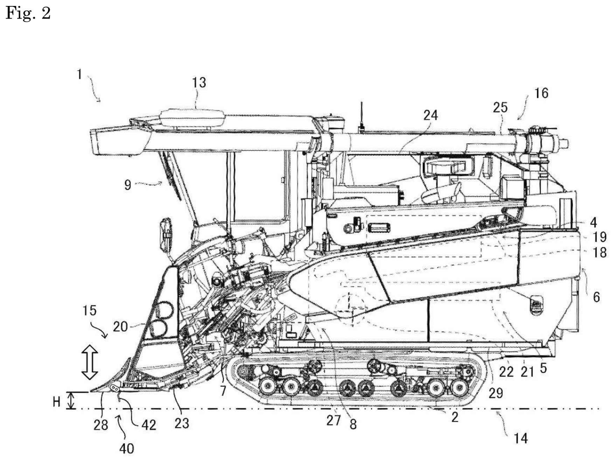

Fig. 2 is an external view of the combine 1 as viewed from the side. As shown in Figs. 1 and 2, the combine 1 includes a threshing unit 4, a sorting unit 5, a waste straw processing unit 6, a power unit 8, a steering unit 9, the vehicle control device 11, a storage unit 12, a positioning unit 13, a traveling unit 14, a reaping unit 15 (an example of a work implement of the present invention), a grain storage unit 16, a communication unit 17, and the like. The combine 1 travels on the traveling unit 14, threshes the grain stalks reaped by the reaping unit 15 on the threshing unit 4, and sorts the grains in the sorting unit 5 and stores them in the grain storage unit 16. The combine 1 processes the waste straw after threshing in the waste straw processing unit 6. The combine 1 drives the traveling unit 14, the reaping unit 15, the grain storage unit 16, the threshing unit 4, the sorting unit 5, and the waste straw processing unit 6 using power supplied by the power unit 8.

The traveling unit 14 is provided below a machine body frame 29, and includes a pair of left and right crawler-type traveling devices 2 and a transmission (not shown). The traveling unit 14 rotates crawlers of the crawler-type traveling device 2 using power (for example, rotational power) transmitted from an engine 27 of the power unit 8, causing the combine 1 to travel in the forward-backward direction and turn in the left-right direction. The transmission transmits the power (rotational power) of the power unit 8 to the crawler-type traveling device 2, and is also capable of changing the speed of the rotational power.

The reaping unit 15 is provided in front of the traveling unit 14 and performs reaping work on rows within the number of rows that can be reaped. The reaping unit 15 includes a divider 28, a raising device 20, a cutting device 23, a transport device 7, and a reaping height detection device 40.

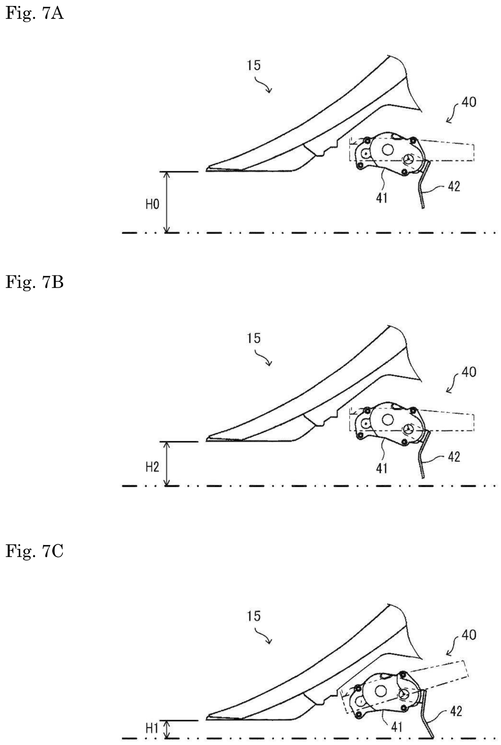

As shown in Fig. 7, the reaping height detection device 40 includes a device main body 41, a grounding body 42, a detection sensor (not shown), and the like, and detects a height H of the reaping unit 15 (see Fig. 2). For example, as shown in Fig. 7C, the detection sensor detects the amount of rotation of the device main body 41 when the reaping unit 15 descends and the grounding body 42 comes into contact with the ground, and the reaping height detection device 40 detects the height H based on a detection signal from the detection sensor. The vehicle control device 11 (work processing unit 112) adjusts the height H by operating a drive unit (hydraulic cylinder or the like) of the reaping unit 15 to maintain the height H detected by the reaping height detection device 40 at a set height (working height H1). Note that Fig. 7A shows the height of the reaping unit 15 when the combine 1 is not working (non-working height H0), and Fig. 7B shows the height of the reaping unit 15 when the combine 1 is working, at a height (intermediate height H2) that can avoid entanglement with the waste straw B1. In this way, the reaping unit 15 is configured to be able to change between a height at the time of non-work (non-working height H0), a height at the time of work (working height H1), and a height between these two heights (intermediate height H2). Note that the intermediate height H2 may be a position set at the time of non-work, or may be a position set at the time of work.

The divider 28 divides the grain stalks in the field F row by row and guides a predetermined number of grain stalks within the number of rows that can be reaped to the raising device 20. The raising device 20 raises the grain stalks guided by the divider 28. The cutting device 23 cuts the grain stalks raised by the raising device 20. The transport device 7 transports the grain stalks cut by the cutting device 23 to the threshing unit 4.

The threshing unit 4 is provided behind the reaping unit 15. The threshing unit 4 includes a feed chain 18 and a threshing drum 19. The feed chain 18 transports the grain stalks transported from the transport device 7 of the reaping unit 15 for threshing, and further transports the grain stalks after threshing, that is, waste straw, to the waste straw processing unit 6. The threshing drum 19 threshes the grain stalks being transported by the feed chain 18.

The sorting unit 5 is provided below the threshing unit 4. The sorting unit 5 includes a swing sorting device 21, an air blow sorting device 22, a grain transport device (not shown), and a straw chip discharge device (not shown). The swing sorting device 21 sifts the threshed materials that have fallen from the threshing unit 4 to sort them into grains, straw chips, and the like. The air blow sorting device 22 further sorts the threshed materials sorted by the swing sorting device 21 into grains, straw chips, and the like by blowing air. The grain transport device transports the grains sorted by the swing sorting device 21 and the air blow sorting device 22 to the grain storage unit 16. The straw chip discharge device discharges straw chips and the like sorted by the swing sorting device 21 and the air blow sorting device 22 to the outside of the machine.

The grain storage unit 16 is provided on the right side of the threshing unit 4. The grain storage unit 16 includes a grain storage tank (grain tank) 24 and a discharge device 25. The grain storage tank 24 stores the grains transported from the sorting unit 5. The discharge device 25 includes an auger or the like, and discharges the grains stored in the grain storage tank 24 to a transport vehicle at a predetermined discharge position in the field F.

The waste straw processing unit 6 is provided behind the threshing unit 4. The waste straw processing unit 6 includes a waste straw transport device (not shown) and a waste straw cutting device (not shown). The waste straw transport device transports the waste straw transported from the feed chain 18 of the threshing unit 4 to the waste straw cutting device. The waste straw cutting device cuts the waste straw transported by the waste straw transport device and discharges the waste straw to the outside of the machine. To a position of the grain stalks to be reaped, the waste straw processing unit 6 discharges the waste straw of the reaped grain stalk. In this way, the combine 1 reaps the grain stalks while traveling and discharges the waste straw B1 to the rear of the machine, and thereby the waste straw B1 is piled up in rows in the wake of the combine 1 (see Fig. 4B and the like).

The power unit 8 is provided above the traveling unit 14 and in front of the grain storage unit 16. The power unit 8 includes an engine 27 that generates rotational power. The power unit 8 transmits the rotational power generated by the engine 27 to the traveling unit 14, the reaping unit 15, the grain storage unit 16, the threshing unit 4, the sorting unit 5, and the waste straw processing unit 6.

The steering unit 9 is provided above the power unit 8. The steering unit 9 is provided around the driver's seat which is a seat where the operator sits, with operating tools for operating the traveling of the combine 1, such as a steering wheel for instructing the turning of the machine body of the combine 1, a main shift lever and a sub-shift lever for instructing changes in the forward and backward speed of the combine 1, and the like. The manual travel of the combine 1 is executed by the traveling unit 14, which receives operations of the steering wheel, the main shift lever, and the sub-shift lever of the steering unit 9. The steering unit 9 also includes mechanisms for operating reaping work by the reaping unit 15, threshing work by the threshing unit 4, discharge work by the discharge device 25 of the grain storage unit 16, and the like.

The positioning unit 13 acquires the vehicle position of the combine 1 using a satellite positioning system such as a GPS. For example, the positioning unit 13 receives a positioning signal from a positioning satellite via a positioning antenna, and acquires position information of the positioning unit 13, that is, the vehicle position of the combine 1 (measurement point data), based on the positioning signal. The positioning unit 13 may include a quantum compass instead of the positioning antenna.

The communication unit 17 (see Fig. 1) is a communication interface for connecting the combine 1 to the communication network N1 in a wired or wireless manner and for executing data communication according to a predetermined communication protocol with an external device such as the operation terminal 3 via the communication network N1.

The storage unit 12 is a non-volatile storage unit such as an HDD, an SSD, or a flash memory that stores various types of information. The storage unit 12 stores a control program for causing the vehicle control device 11 to execute predetermined processing. For example, the control program is recorded in a non-transitory manner on a computer-readable recording medium such as a flash ROM, an EEPROM, a CD, or a DVD, and is read by a predetermined reading device (not shown) and stored in the storage unit 12. Note that the control program may be downloaded from a server (not shown) to the combine 1 via the communication network N1 and stored in the storage unit 12. In addition, various types of setting information acquired from the operation terminal 3 is stored in the storage unit 12.

The vehicle control device 11 includes control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory for various types of processing executed by the CPU. The vehicle control device 11 controls the combine 1 by executing, with the CPU, various control programs stored in advance in the ROM or the storage unit 12.

Specifically, as shown in Fig. 1, the vehicle control device 11 includes various processing units such as a travel processing unit 111, a work processing unit 112, and a registration processing unit 113. Note that the vehicle control device 11 functions as the various processing units by executing, with the CPU, various types of processing according to the control program. In addition, some or all of the processing units may include an electronic circuit. Note that the control program may be a program for causing a plurality of processors to function as the processing unit.

The travel processing unit 111 causes the combine 1 to travel along the target path R set for the field F. Specifically, in a case where a manual travel mode is set, the travel processing unit 111 causes the combine 1 to travel in response to the manual operation by the operator. For example, the travel processing unit 111 causes the combine 1 to travel straight along the outermost peripheral path Re in the outermost peripheral area F0 of the field F (see Fig. 3) in response to the operation of the operator to switch between forward travel and backward travel, or to switch the vehicle speed. In addition, the travel processing unit 111 causes the combine 1 to automatically travel along the inner peripheral path Rf (automatic travel path) from the start position S to the end position G in the inner peripheral area F1.

The work processing unit 112 changes the position (posture) of the reaping unit 15 based on the position of the combine 1, and causes the reaping unit 15 to execute reaping work. Specifically, the work processing unit 112 changes (for example, raises and lowers) the position (height) of the reaping unit 15 in stages between the working height and the non-working height. For example, in a case where the combine 1 reaches a position a predetermined distance before a start point of the work path, the work processing unit 112 sets the reaping unit 15 to the working height H1 (see Fig. 7C), and in a case where the combine 1 passes an end point of the work path, the work processing unit 112 sets the reaping unit 15 to the non-working height H0 (see Fig. 7A). In addition, the work processing unit 112 may set the reaping unit 15 to the intermediate height H2 that can avoid entanglement with the waste straw B1 (see Fig. 4B) when the combine 1 passes over the waste straw B1.

### [Corner reaping work method in outermost peripheral area F0]

Next, a specific example of corner reaping work in the outermost peripheral area F0 of the field F will be described. The combine 1 performs reaping work at the corners of the field F while traveling in the outermost peripheral area F0 in response to the operation of the operator.

For example, as shown in Fig. 8A, first, the operator gets on the combine 1 and starts traveling straight (manual traveling) along the outer periphery (right side in Fig. 8A) of the work area to be reaped, and sets the reaping unit 15 to the working height H1 (see Fig. 7C) to start reaping work. At the point in time when the combine 1 has traveled straight a predetermined distance, the operator performs a registration operation on the operation terminal 3 to register the current position (point A) of the combine 1. Thereafter, at the point in time when the combine 1 has traveled straight a predetermined distance from the point A, the operator performs a registration operation on the operation terminal 3 to register the current position (point B) of the combine 1. After acquiring the registered points A and B, the generation processing unit 312 generates a straight line (reference line L0) that passes through the points A and B.

When the reference line L0 is generated, the combine 1 is ready for automatic travel, and when the operator issues the automatic traveling start instruction, the combine 1 starts automatic travel in a straight direction along the reference line L0. For example, when the operator shifts the main shift lever to the forward position, the combine 1 automatically travels in the forward direction along the reference line L0 at a vehicle speed according to the shift position. As a result, reaping work on the outer periphery (right side) of the work area (first pass) can be executed.

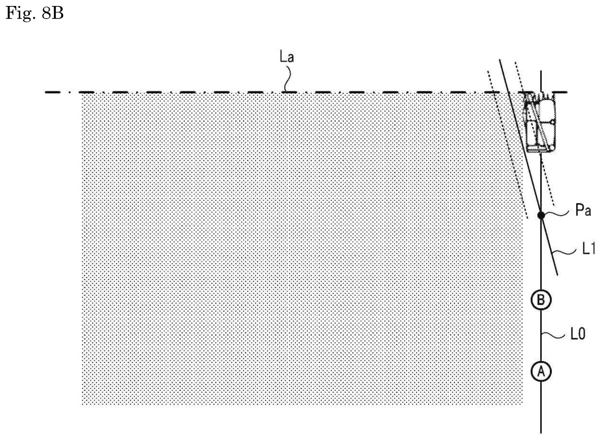

Subsequently, when the combine 1 reaches an outer peripheral end of the work area (upper side in Fig. 8A), the operator shifts the main shift lever to a stop position (neutral position and the like) to stop the automatic travel. The operator also stops reaping work by raising the reaping unit 15 to the non-working height H0. When the combine 1 stops automatic travel and reaping work, the generation processing unit 312 generates an outer line La of the work area based on the stop position of the combine 1 (see Fig. 8B). For example, the generation processing unit 312 sets, as the outer line La, a straight line that passes through the tip of the combine 1 (tip of the reaping unit 15) and is perpendicular to the reference line L0. As another embodiment, a generation processing unit 312 may set an outer line La that follows the outer shape of the work area based on map information.

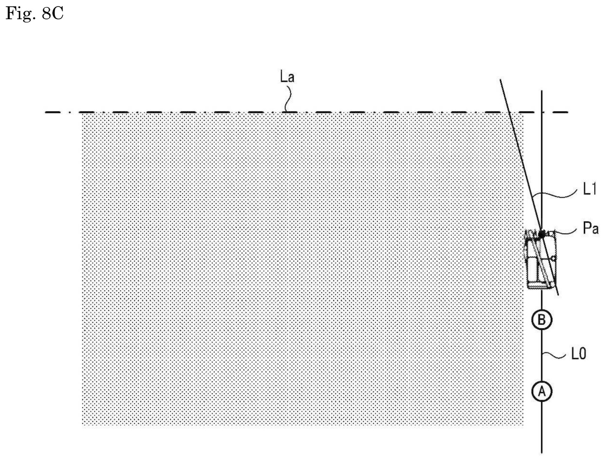

Subsequently, when the operator shifts the main shift lever to the backward position, the combine 1 starts automatic travel in the backward direction along the reference line L0. In addition, when the operator shifts the main shift lever to the backward position, the generation processing unit 312 generates an inclined path L1 that passes through an unworked area (non-reaped area) of a second pass adjacent to an already worked area (already reaped area) of the outer periphery (right side) (first pass) and is inclined by a predetermined angle with respect to the reference line L0 (see Fig. 8B). The combine 1 automatically travels in a backward direction along the reference line L0 from a backward movement start position (stop position) and stops the automatic travel at an intersection point Pa of the reference line L0 and the inclined path L1 (see Fig. 8C). Note that the combine 1 may be stopped at the intersection point Pa such that the vehicle orientation is aligned with the orientation of the inclined path L1. As another embodiment, a combine 1 may move backward along a reference line L0 until the combine 1 passes an intersection point Pa and then stop.

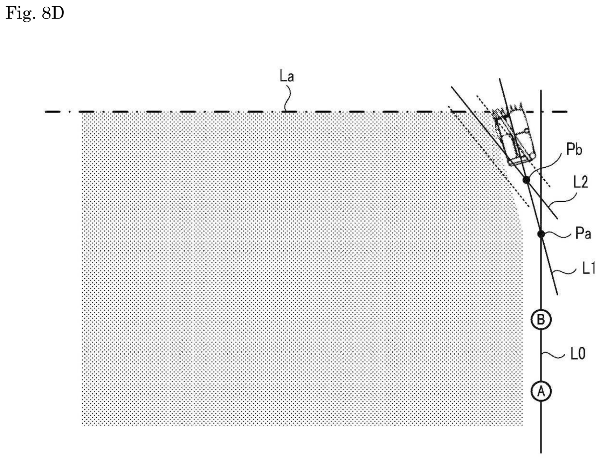

Next, when the operator lowers the reaping unit 15 to the working height H1 (see Fig. 7C) and shifts the main shift lever to the forward position, the combine 1 starts automatic travel and reaping work in the forward direction along the inclined path L1. The combine 1 travels along the inclined path L1 and stops automatic travel when the combine 1 reaches the outer line La (see Fig. 8D). The operator also stops reaping work by raising the reaping unit 15 to the non-working height H0 (see Fig. 7A). As a result, reaping work in the area (second pass) in the work area corresponding to the inclined path L1 is completed (see Fig. 8D). Note that the combine 1 may emit a buzzer sound in a case where the remaining distance to the outer line La is less than a predetermined distance, to notify the operator that the combine 1 is approaching the outer line La. The combine 1 may also be automatically stopped in a case where the combine 1 reaches the outer line La.

Subsequently, when the operator shifts the main shift lever to the backward position, the combine 1 starts automatic travel in the backward direction along the inclined path L1. In addition, when the operator shifts the main shift lever to the backward position, the generation processing unit 312 generates an inclined path L2 that passes through an unworked area (non-reaped area) of a third pass adjacent to an already worked area (second pass) corresponding to the inclined path L1 and is inclined by a predetermined angle with respect to the inclined path L1 (see Fig. 8D). The combine 1 automatically travels in the backward direction along the inclined path L1 from the backward movement start position (stop position) and stops the automatic travel at an intersection point Pb of the inclined path L1 and the inclined path L2. Note that the combine 1 may be stopped at the intersection point Pb such that the vehicle orientation is aligned with the orientation of the inclined path L2. As another embodiment, a combine 1 may move backward along an inclined path L1 until the combine 1 passes an intersection point Pb and then stop.

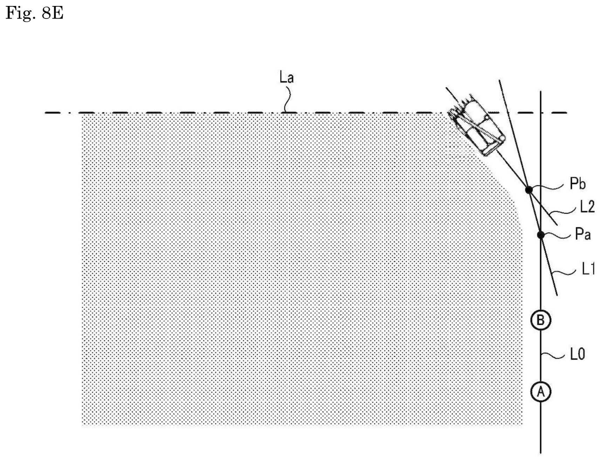

Next, when the operator lowers the reaping unit 15 to the working height H1 (see Fig. 7C) and shifts the main shift lever to the forward position, the combine 1 starts automatic travel and reaping work in the forward direction along the inclined path L2. The combine 1 stops automatic travel when the combine 1 reaches the outer line La (see Fig. 8E). The operator also stops reaping work by raising the reaping unit 15 to the non-working height H0. As a result, reaping work in the area (third pass) in the work area corresponding to the inclined path L2 is completed (see Fig. 8E). Note that the combine 1 may emit a buzzer sound in a case where the remaining distance to the outer line La is less than a predetermined distance, to notify the operator that the combine 1 is approaching the outer line La.

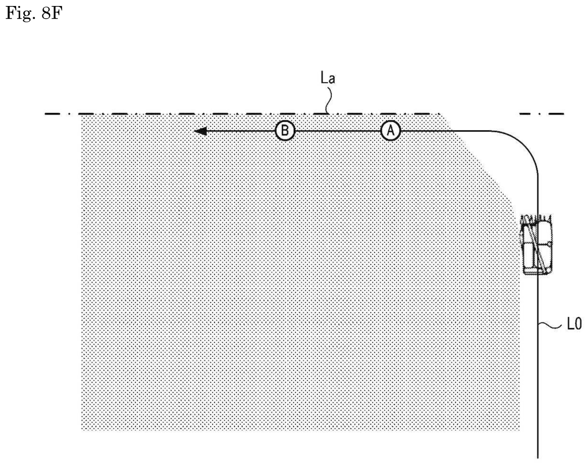

When a turning area necessary for the combine 1 to turn when moving to the next work path is secured at the corner (upper right corner) of the work area by reaping work of the first, second, and third passes, the operator finishes corner reaping work of the work area and moves the combine 1 to the next work path. For example, when the operator shifts the main shift lever to the backward position, the combine 1 starts automatic travel in the backward direction along the inclined path L2, the inclined path L1, and the reference line L0, and stops at a predetermined position on the reference line L0. Thereafter, the operator shifts the main shift lever to the forward position and manually steers the combine 1 to turn in the already worked area and move the combine 1 to the next work path (see Fig. 8F).

When the combine 1 enters the next work path, the operator starts traveling straight (manual traveling) along the outer periphery (upper side in Fig. 8F) of the work area and starts reaping work, and performs a registration operation of registering the points A and B on the operation terminal 3. As a result, the reference line L0 corresponding to the next work path is generated. Thereafter, the combine 1 performs corner reaping work at the corner (upper left corner) of the work area in response to the operation of the operator in the above-described procedure. Similarly, the combine 1 performs corner reaping work at the lower left and right corners of the work area in response to the operation of the operator.

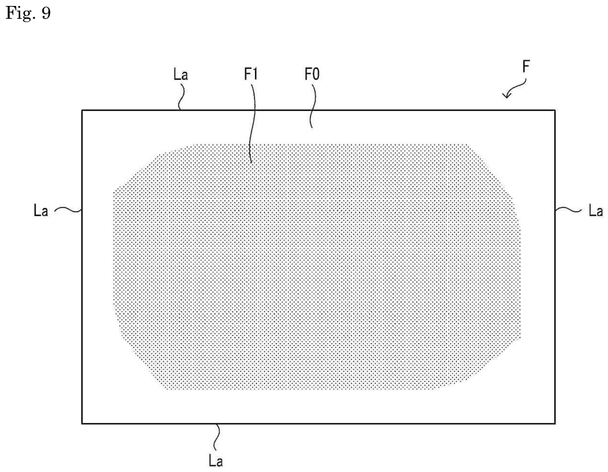

When corner reaping work at each corner of the work area is completed, the setting processing unit 311 specifies the shape surrounded by the outer lines La, and registers the area surrounded by the outer lines La as the field F (see Fig. 9). In the field F, the outermost peripheral area F0 is an already worked area where reaping work has finished, and the inner peripheral area F1 is an unworked area where reaping work has not finished. Note that a method for registering the field F is not limited thereto, and the setting processing unit 311 may apply, for example, a publicly known technique (see JP-A-2022-87959 and JP-A-2023-56476) in which the vehicle position (measurement point data and a positioning point) of the combine 1 is approximated to a straight line and the area surrounded by the approximate straight line is registered as the field F.

In this manner, the traveling system 10 executes corner reaping work in the outermost peripheral area F0. Note that, in the above-described embodiment, although corner reaping work in the outermost peripheral area F0 in a state in which no field F is registered has been described, in a case where the field F is registered, the generation processing of the outer line La is omitted. In this case, the operator may cause the combine 1 to automatically travel according to the outer periphery of the field F (right side, upper side, left side, and lower side) and stop the automatic travel. The reference line L0, the inclined path L1, and the inclined path L2 are included in the outermost peripheral path Re.

In addition, in the above configuration, at the intersection point Pa (see Fig. 8C), the generation processing unit 312 sets an inclination angle of the inclined path L1 and the position of the intersection point Pa such that the vehicle body (rear end) of the combine 1 does not jump out of the work area due to the turning operation when moving to the second pass. Similarly, at the intersection point Pb (see Fig. 8D), the generation processing unit 312 sets an inclination angle of the inclined path L2 and the position of the intersection point Pb such that the vehicle body of the combine 1 does not jump out of the work area due to the turning operation when moving to the third pass. Note that the maximum value of the inclination angle (maximum inclination angle) may be set in advance. In this case, the generation processing unit 312 may, for example, first draw an inclined straight line at the maximum inclination angle, reduce the inclination angle in a case where the vehicle body jumps out of the work area, and set the inclined straight line at the maximum angle at which the vehicle body does not jump out of the work area as the inclined path L1. In this way, the generation processing unit 312 determines the inclination angles of the inclined paths L1 and L2 such that the rear end of the vehicle body does not jump out of the work area.

The corner reaping work method in the outermost peripheral area F0 is not limited to the above method. As another embodiment, a combine 1 may perform reaping work while traveling (manual traveling) in response to manual steering by an operator in an outermost peripheral area F0. The setting processing unit 311 may also register the field F by specifying the shape of the already worked area based on the position information of the combine 1 acquired at the time of manual travel.

In addition, as another embodiment, a combine 1 may perform reaping work in an outermost peripheral area F0 by automatic travel without relying on the operation by an operator (for example, the shift operation of a main shift lever).

Moreover, as another embodiment, a combine 1 may automatically travel along a path parallel to outer sides of a field F in a case where the shape of the field F has already been registered.

### [Generation method of inner peripheral path Rf (automatic travel path)]

Next, a specific example of a method for generating the automatic travel path (inner peripheral path Rf) for causing the combine 1 to automatically travel in the inner peripheral area F1 will be described. The traveling system 10 generates the inner peripheral path Rf based on the position of the unworked area (unworked site), the position of the already worked area (already worked site), the outer shape of the field F (position of the outer periphery of the field), and the like. In addition, the traveling system 10 executes the generation processing of the inner peripheral path Rf after reaping work in the outermost peripheral area F0 is finished. As another embodiment, a travel processing unit 111 may acquire the position information of an outermost peripheral area F0 and execute the generation processing of an inner peripheral path Rf before reaping work in the outermost peripheral area F0.

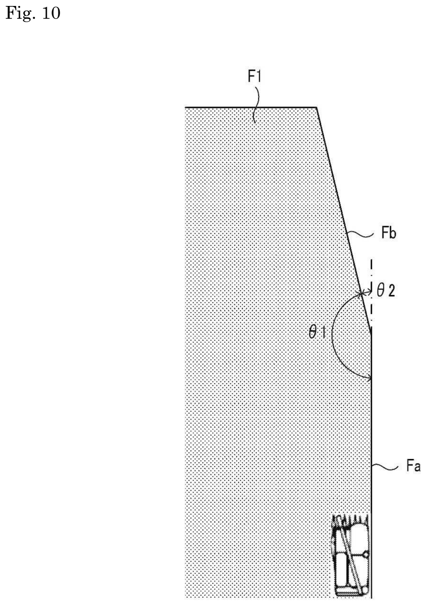

Fig. 10 shows the unworked area (inner peripheral area F1) which is a target area for automatic travel. The setting processing unit 311 of the operation terminal 3 sets either one of a first mode for generating a target path including a backward path at the connection portion between the first work path and the second work path and a second mode for generating a target path not including the backward path at the connection portion. The generation processing unit 312 generates the target path based on the first mode or the second mode. Note that the target path includes a straight work path which is a path from the start position S to the end position G and on which work is performed while traveling straight, and a movement path (non-work path) for moving from the straight work path to the next straight work path in a state where the work is stopped.

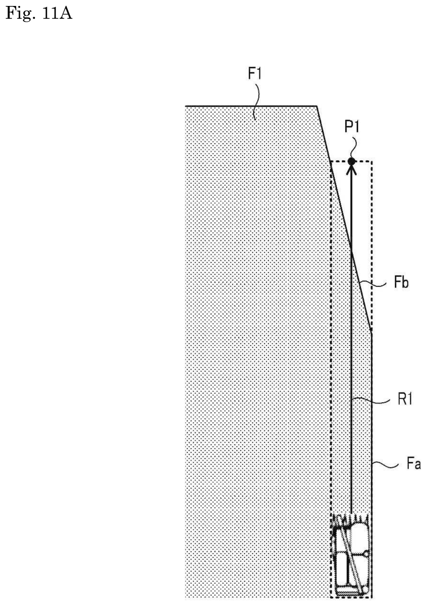

Specifically, in a case where the first mode is set, as shown in Fig. 11A, the generation processing unit 312 generates a work path R1 (forward straight path) parallel to an outer side Fa which is the outermost peripheral position of the inner peripheral area F1 (unworked area). In addition, the generation processing unit 312 generates the work path R1 having a length that enables reaping of the grain stalks existing in the working direction of the combine 1 (grain stalks in a portion surrounded by a dotted line in Fig. 11A). That is, the generation processing unit 312 generates the work path R1 having a position P1, as the end point, where the tip of the reaping unit 15 passes through the unworked area.

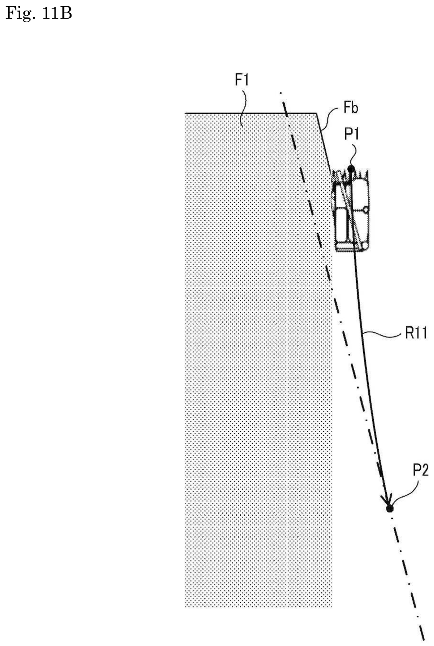

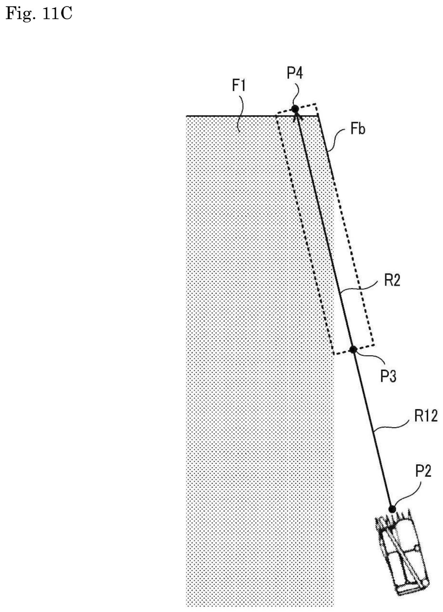

In addition, as shown in Fig. 11B, the generation processing unit 312 generates a non-work path R11 (backward turning path) having a position P2, as the end point, on an extension line of a next work path R2 in a direction parallel to an outer side Fb from the position P1. In addition, as shown in Fig. 11C, the generation processing unit 312 generates a non-work path R12 (forward straight path) parallel to the outer side Fb with the position P2 as the start point and a position P3, as the end point, at which the tip of the reaping unit 15 enters the unworked area. In addition, the generation processing unit 312 generates a work path R2 (forward straight path) which is an extension line of the non-work path R12 and is parallel to the outer side Fb having the position P3 as the start point and the position P4, as the end point, at which the tip of the reaping unit 15 passes through the unworked area. In addition, the generation processing unit 312 generates the work path R2 having a length that enables reaping of the grain stalks existing in the working direction of the combine 1 (grain stalks in a portion surrounded by a dotted line in Fig. 11C).

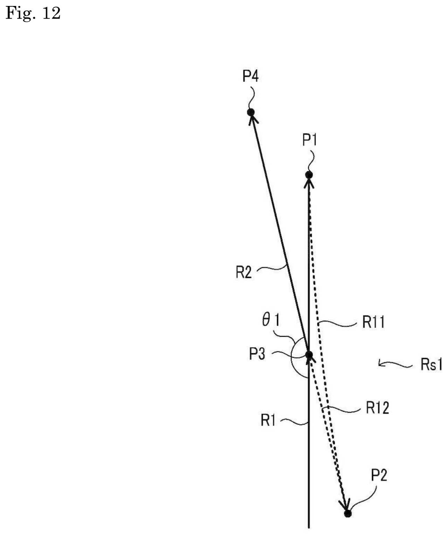

As described above, in a case where the first mode is set, as shown in Fig. 12, the generation processing unit 312 generates the work paths R1 and R2 along the outer sides Fa and Fb of the unworked area (inner peripheral area F1) and the non-work paths R11 and R12 (movement path Rs1) connecting the work paths R1 and R2. In addition, the generation processing unit 312 generates the movement path Rs1 (for example, "α turn") including the backward path. That is, in a case where the first mode is set, the generation processing unit 312 generates the target path (see Fig. 12) including the backward path at the connection portion between the work path R1 and the work path R2. Note that the generation processing unit 312 may generate a target path including a straight backward path for moving backward from the position P1 along the work path R1, a right backward turning path for moving backward and turning rightward before the position P3, and a forward straight path for moving from the right backward turning path to the work path R2. According to this target path, the turning distance of the backward turning path becomes shorter than that of the target path shown in Fig. 12.

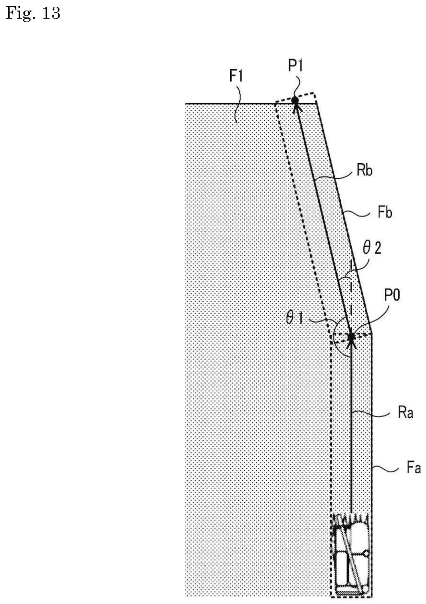

On the other hand, in a case where the second mode is set, as shown in Fig. 13, the generation processing unit 312 generates the target path in which the work path Ra along the outer side Fa of the unworked area and the work path Rb along the outer side Fb of the unworked area are connected at a position P0. That is, in a case where the second mode is set, the generation processing unit 312 generates a target path that does not include a backward path at the connection portion between the work path R1 and the work path R2 and allows forward travel and work on the work path R1 and the work path R2 continuously (see Fig. 13).

Here, when the above-described corner reaping work (see Figs. 8A to 8F) is performed in the outermost peripheral area F0, the unworked area does not have a rectangular shape (see Fig. 9), and an inclined side may be formed as the outer side Fb shown in Fig. 10. Specifically, an angle θ1 (see Fig. 10) formed between the outer side Fa and the outer side Fb of the unworked area is an angle (obtuse angle) larger than 90 degrees and smaller than 180 degrees. That is, the angle θ1 (see Figs. 12 and 13) formed between the first work path (work path R1 and work path Ra) and the second work path (work path R2 and work path Rb) is an angle (obtuse angle) larger than 90 degrees and smaller than 180 degrees.

In a case where the formed angle θ1 is large, as shown in Fig. 12, the path length of the non-work path R11, which is the backward path, becomes long, and the travel distance of the backward travel becomes long. In addition, the path length of the non-work path R12, which is the forward path, also becomes long, and the travel distance of the non-work travel becomes long. Therefore, there arises a problem that work efficiency is deteriorated. On the other hand, when the combine 1 travels along the target path shown in Fig. 13 in a state where the formed angle θ1 is small, there arises a problem that the divider 28 causes the grain stalks to be lodged or the soil of the field to be rough at the connection portion between the work path Ra and the work path Rb.

Therefore, in the present embodiment, in a case where the angle θ1 formed between the first work path and the second work path is an obtuse angle, the setting processing unit 311 sets either one of the first mode for generating a target path including a backward path and a second mode for generating a target path not including the backward path. Specifically, the setting processing unit 311 sets the first mode (see Fig. 12) in a case where the formed angle θ1 is less than the predetermined angle, and sets the second mode (see Fig. 13) in a case where the formed angle θ1 is equal to or larger than the predetermined angle. For example, the predetermined angle is set to an angle of 170 degrees or more and 175 degrees or less. In addition, the predetermined angle is set according to an input operation of the operator.

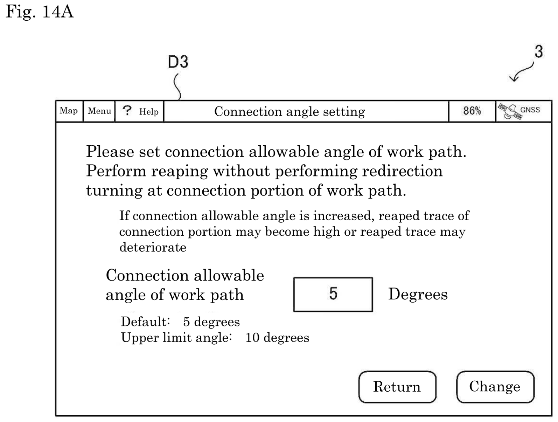

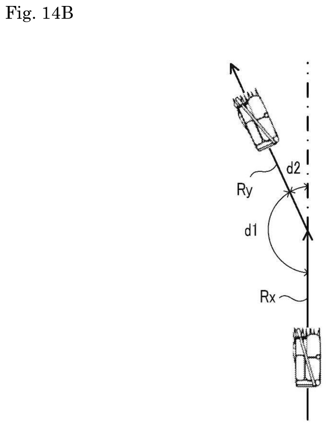

For example, on the setting screen D3 shown in Fig. 14A, the operator can input an arbitrary connection allowable angle d2 (see Fig. 14B) between a first work path Rx and a second work path Ry within a range of 5 degrees to 10 degrees (allowable range). Note that, as shown in Fig. 14B, the connection allowable angle d2 is expressed by "180 degrees - formed angle d1". The setting processing unit 311 sets the angle input by the operator as the connection allowable angle d2. In addition, the setting processing unit 311 sets a mode (first mode or second mode) according to the connection allowable angle d2. Note that the connection allowable angle input by the operator may be an angle (d1) formed between the work paths (see Fig. 14B).

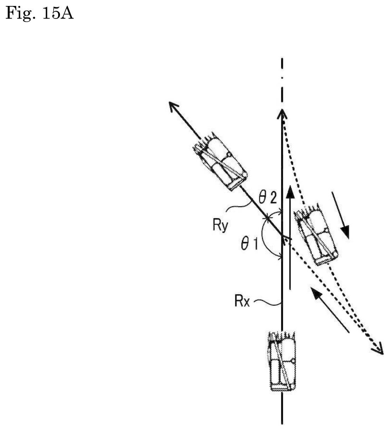

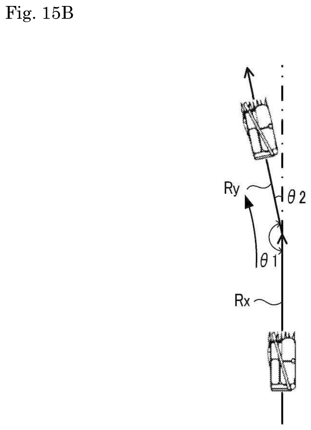

Note that, in a case where a connection angle θ2 between the first work path Rx and the second work path Ry exceeds, for example, 10 degrees (out of the allowable range), the travel direction is largely switched at the connection portion between the first work path Rx and the second work path Ry. Therefore, as shown in Fig. 15A, the combine 1 needs to perform redirection turning including backward travel at the connection portion. On the other hand, in a case where the connection angle θ2 is within a range (allowable range) of, for example, 5 degrees to 10 degrees, the first work path Rx and the second work path Ry are connected at a gentle obtuse angle, and the direction change is gentle. Therefore, as shown in Fig. 15B, the combine 1 does not need to perform redirection turning including backward travel at the connection portion, and can travel while continuously reaping the grain stalks of the first work path Rx and the second work path Ry. That is, the allowable range is a range of an angle (connection allowable angle) at which a target path, which does not include a path for backward travel (backward path) at the connection portion between the work paths, can be generated. **In** addition, the angle input by the operator within the allowable range is a determination reference value of the connection allowable angle.

The generation processing unit 312 generates the target path based on the mode (first mode or second mode) corresponding to the connection allowable angle d2 set by the setting processing unit 311. Specifically, in a case where the connection angle θ2 between the first work path Rx and the second work path Ry is equal to or larger than the connection allowable angle d2 that is the determination reference value (a case where the formed angle θ1 is less than the connection allowable angle d1), the generation processing unit 312 generates the target path based on the first mode. For example, as shown in Fig. 15A, the generation processing unit 312 generates the target path including the backward path at the connection portion between the first work path Rx and the second work path Ry. On the other hand, in a case where the connection angle θ2 is less than the connection allowable angle d2 (a case where the formed angle θ1 is equal to or larger than the connection allowable angle d1), the generation processing unit 312 generates the target path based on the second mode. For example, as shown in Fig. 15B, the generation processing unit 312 generates the target path not including the backward path at the connection portion between the first work path Rx and the second work path Ry.

Note that the operator sets the connection allowable angle d2 in advance on the setting screen D3 (Fig. 14A), for example, before starting work in the field F. Then, for example, when the operator presses the path generation button Ka ("auto path creation") on the operation screen D1 (see Fig. 6A) at the point in time when reaping work in the outermost peripheral area F0 has finished, the generation processing unit 312 generates the target path (inner peripheral path Rf (see Fig. 4)) of the inner peripheral area F1 based on the connection allowable angle d2. For example, the generation processing unit 312 generates the straight first work path Rx and the straight second work path Ry parallel to the outer sides Fa and Fb (see Fig. 10) of the unworked area or the outer sides of the already worked area in the inner peripheral area F1, and generates the connection path (target path) based on the mode (first mode or second mode) set according to the connection angle θ2 of the first work path Rx and the second work path Ry and the preset connection allowable angle d2.

In the first mode, the generation processing unit 312 generates the target path including the backward path (see Fig. 15A) at the connection portion between the first work path Rx and the second work path Ry. On the other hand, in the second mode, the generation processing unit 312 generates the target path connecting the first work path Rx and the second work path Ry without generating the backward path (see Fig. 15B).

In the second and subsequent rounds in the inner peripheral area F1, the generation processing unit 312 similarly generates a straight first work path Rx and a straight second work path Ry parallel to the outer sides of the unworked area (predicted unworked area after the second and subsequent rounds) or the outer sides of the predicted already worked area, and similarly generates a connection path (target path) based on the mode (first mode or second mode) set according to the connection angle θ2 between the first work path Rx and the second work path Ry and the preset connection allowable angle d2.

As another embodiment, an operator may set or change a connection allowable angle d2 at the timing of starting the work of an inner peripheral area F1. In addition, the operator may set or change the connection allowable angle d2 every round in the inner peripheral area F1.

According to the above configuration, for example, in a case where the first work path Rx and the second work path Ry are connected at an angle within the allowable range (less than the connection allowable angle d2) and the target path is generated in the second mode, the backward travel is omitted when the combine 1 moves from the first work path Rx to the second work path Ry (see Fig. 15B), so that the work loss caused by the backward travel can be suppressed. Therefore, the work efficiency can be improved. In addition, for example, in a case where the first work path Rx and the second work path Ry are connected at an angle out of the allowable range (equal to or larger than the connection allowable angle d2) and the target path is generated in the first mode, the backward travel is performed when the combine 1 moves from the first work path Rx to the second work path Ry (see Fig. 15A), so that the lodging of the grain stalks and the soil roughness of the field can be suppressed.

Note that, in the above-described embodiment, although the first mode or the second mode is set for the unworked area formed by the corner reaping work, the present invention is not limited thereto and can be applied to various cases where the first work path Rx and the second work path Ry are connected at an obtuse angle.

### [Generation processing of target path (inner peripheral path Rf)]

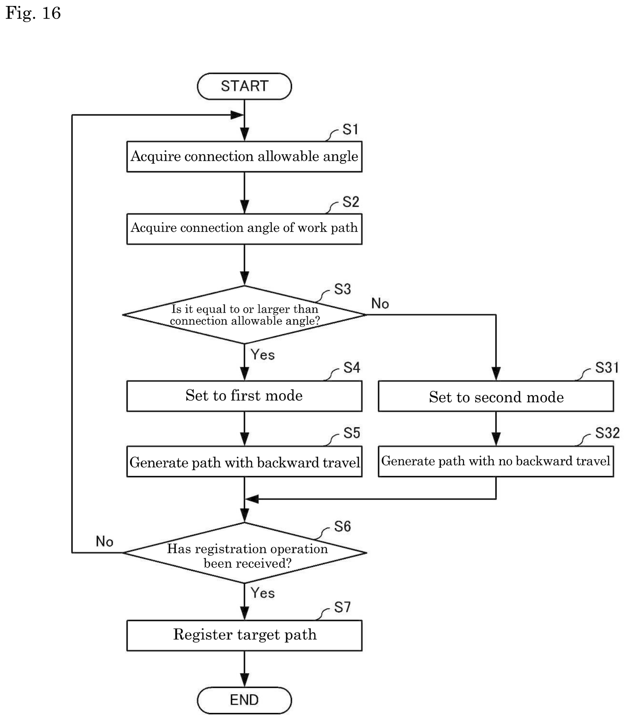

Hereinafter, an example of the generation processing (path generation processing) of a target path (inner peripheral path Rf) for automatic travel executed by the traveling system 10 will be described with reference to Fig. 16.

Note that the present invention can be understood as an invention of a path generation method for executing one or more steps included in the path generation processing. In addition, one or more steps included in the path generation processing described here may be omitted as appropriate. Moreover, the steps in the path generation processing may be executed in a different order as long as the same operational effect is achieved. Furthermore, here, although a case where the operation control unit 31 of the operation terminal 3 executes each step in the path generation processing will be described as an example, a path generation method in which one or more processors execute each step in the path generation processing in a distributed manner is also considered as another embodiment.

### <Step S1>

In step S1, the operation control unit 31 acquires an angle (connection allowable angle) at which a target path, which does not include a path for backward travel (backward path) at a connection portion between work paths, can be generated. For example, as shown in Fig. 14A, the operator can input an arbitrary angle (connection allowable angle d2) within an allowable range of 5 degrees to 10 degrees on the setting screen D3. Note that the operation control unit 31 may display in advance the lower limit value of the allowable range ("5 degrees") as the default angle. The operation control unit 31 acquires the connection allowable angle d2 input by the operator. Note that, here, the connection allowable angle indicates the angle d2 shown in Fig. 14B, but may be an angle d1 (d1 = 180 degrees - d2) formed between the work paths.

### <Step S2>

In step S2, the operation control unit 31 acquires the connection angle of the connection portion between the work paths. Specifically, the operation control unit 31 acquires the connection angle θ2 (or the formed angle θ1) of the first work path Rx and the second work path Ry generated according to the outermost peripheral position of the unworked area in the inner peripheral area F1. For example, in the case of the inner peripheral area F1 shown in Fig. 10, the operation control unit 31 generates the first work path Rx parallel to the outer side Fa and the second work path Ry parallel to the outer side Fb, and acquires the connection angle θ2 between the first work path Rx and the second work path Ry.

### <Step S3>

In step S3, the operation control unit 31 determines whether the connection angle θ2 is equal to or larger than the connection allowable angle d2. When determining that the connection angle θ2 is equal to or larger than the connection allowable angle d2 (S3: Yes), the operation control unit 31 causes the processing to proceed to step S4. On the other hand, when determining that the connection angle θ2 is less than the connection allowable angle d2 (S3: No), the operation control unit 31 causes the processing to proceed to step S31.

### <Step S4>

In step S4, the operation control unit 31 sets a generation mode of the path generation to the first mode. That is, the operation control unit 31 sets to the generation mode (first mode) for generating a target path including the backward path at the connection portion between the first work path Rx and the second work path Ry.

### <Step S5>

In step S5, the operation control unit 31 generates a target path corresponding to the first mode. Specifically, as shown in Fig. 15A, the operation control unit 31 generates the target path including the backward path at the connection portion between the first work path Rx and the second work path Ry. That is, the operation control unit 31 generates the target path including a turning path for turning the combine 1 backward (α turn). Note that the travel method of the backward travel is not limited to the method shown in Fig. 15A ("α turn"), and may be a known travel method. After step S5, the operation control unit 31 causes the processing to proceed to step S6.

### <Step S31>

In step S31, the operation control unit 31 sets a generation mode of the path generation to the second mode. That is, the operation control unit 31 sets to the generation mode (second mode) for generating a target path not including the backward path at the connection portion between the first work path Rx and the second work path Ry.

### <Step S32>

In step S32, the operation control unit 31 generates a target path corresponding to the second mode. Specifically, as shown in Fig. 15B, the operation control unit 31 generates the target path not including the backward travel when moving from the first work path Rx to the second work path Ry. In addition, the operation control unit 31 generates the target path in which no non-work path is interposed between the first work path Rx and the second work path Ry. After step S5, the operation control unit 31 causes the processing to proceed to step S6.

### <Step S6>

In step S6, the operation control unit 31 determines whether a registration operation of the target path has been received from the operator. When the registration operation has been received from the operator (S6: Yes), the operation control unit 31 causes the processing to proceed to step S7. On the other hand, in a case where the registration operation has not been received from the operator (S6: No), the operation control unit 31 returns the processing to step S1 and repeats the above-described processing. For example, in a case where the operator checks the path creation result screen D2 (see Fig. 6B) and determines that the target path is not the intended path, the operator can give an instruction to regenerate the target path. In this case, the operator can change the connection allowable angle d2 on the setting screen D3 (see Fig. 14A).

### <Step S7>

In step S7, the operation control unit 31 registers the generated target path. Specifically, the operation control unit 31 registers the target path in association with the field F. In addition, the operation control unit 31 may register the connection allowable angle d2 input by the operator in association with the field F. Furthermore, the operation control unit 31 may register the connection allowable angle d2 in association with the target path. By registering the connection allowable angle d2, for example, the registered connection allowable angle d2 can be displayed as a default angle on the setting screen D3 at the time of the next work on the same field F. In addition, the operator can read and set the registered connection allowable angle d2 at the time of the next work.

The operation control unit 31 executes the generation processing of the target path (inner peripheral path Rf) in a manner described above. After the target path is generated, when the operator inputs an automatic traveling start instruction at the operation terminal 3, the operation control unit 31 outputs path data of the target path to the combine 1. When the vehicle control device 11 of the combine 1 acquires the path data from the operation terminal 3, the vehicle control device 11 causes the combine 1 to start automatic travel and reaping work, and execute automatic travel and reaping work along the inner peripheral path Rf from the start position S to the end position G.

Specifically, when acquiring the path data of the target path in the first mode, as shown in Fig. 15A, the vehicle control device 11 causes the combine 1 to travel straight along the first work path Rx, then switch to the backward direction to travel backward (turning travel), and switch from the backward travel to the forward travel to move to the second work path Ry. On the other hand, when acquiring the path data of the target path in the second mode, as shown in Fig. 15B, the vehicle control device 11 causes the combine 1 to travel forward and straight along the first work path Rx, and then continue the forward and straight travel to move to the second work path Ry. In this manner, in a case where the angle formed between the first work path Rx and the second work path Ry is an obtuse angle (larger than 90 degrees and less than 180 degrees), the vehicle control device 11 sets (selects) either one of a first travel mode for causing the combine 1 to travel on a target path including a backward path at the connection portion between the first work path Rx and the second work path Ry and a second travel mode for causing the combine 1 to travel on a target path not including the backward path at the connection portion. Then, the vehicle control device 11 causes the combine 1 to execute automatic travel and reaping work along the target path (inner peripheral path Rf) from the start position S to the end position G in the inner peripheral area F1.

As described above, the traveling system 10 according to the present embodiment includes the first work path Rx and the second work path Ry following the first work path Rx, and generates the target path on which the combine 1 automatically travels. In addition, in a case where the angle θ1 formed between the first work path Rx and the second work path Ry is an obtuse angle, the traveling system 10 sets either one of the first mode for generating the target path including the backward path at the connection portion between the first work path Rx and the second work path Ry and the second mode for generating the target path not including the backward path at the connection portion.

Specifically, the traveling system 10 sets to the first mode in a case where the formed angle θ1 (see Figs. 15A and 15B) is less than a predetermined angle (that is, the connection angle θ2 is equal to or larger than the connection allowable angle d2), and sets to the second mode in a case where the formed angle θ1 is equal to or larger than the predetermined angle (that is, the connection angle θ2 is less than the connection allowable angle d2). In addition, the connection allowable angle d2 is set according to an input operation of the operator (see Fig. 14A).

According to the above configuration, in a case where the first work path Rx and the second work path Ry are connected at an obtuse angle, it is possible to continuously perform reaping work by forward travel without causing the combine 1 to travel backward when the combine 1 is caused to move from the first work path Rx to the second work path Ry. Therefore, work loss caused by backward travel can be suppressed, and work efficiency can be improved. In addition, according to the above configuration, since the operator can set an arbitrary connection allowable angle d2 (see Fig. 14A), the target path can be generated by the generation mode (first mode or second mode) desired by the operator. As another embodiment, an operator may be able to set a generation mode to a first mode or a second mode on a setting screen.

Here, if the storage amount in the grain storage tank 24 increases, the combine 1 swings out when turning, and it may be difficult to appropriately travel on the target path corresponding to the second mode. Therefore, the setting processing unit 311 may not permit the setting to the second mode according to the storage amount in the grain storage tank 24 being operated. Specifically, the setting processing unit 311 permits setting only to the first mode in a case where the storage amount in the grain storage tank 24 is equal to or more than a predetermined amount. In addition, the setting processing unit 311 may change the connection angle θ2 at which the setting to the second mode is permitted to a smaller angle as the storage amount in the grain storage tank 24 increases. As a result, for example, when the storage amount in the grain storage tank 24 increases, the setting to the second mode is permitted in a case where the connection angle θ2 is small, and the setting to the second mode is prohibited when the connection angle θ2 is large.

In addition, the setting processing unit 311 may decrease the threshold of the set vehicle speed at which the setting to the second mode is permitted as the storage amount in the grain storage tank 24 increases. As a result, for example, when the storage amount in the grain storage tank 24 increases, the setting to the second mode is permitted only at a low speed, and the setting to the second mode is prohibited at a high speed.

In addition, the setting processing unit 311 may change the connection angle θ2 at which the setting to the second mode is permitted to a smaller angle as the storage amount in the grain storage tank 24 increases and the set vehicle speed increases.

Moreover, the setting processing unit 311 may decrease the threshold of the set vehicle speed at which the setting to the second mode is permitted as the storage amount in the grain storage tank 24 increases and the connection angle θ2 becomes large.

In addition, the vehicle control device 11 may control the vehicle speed of the combine 1 according to the storage amount in the grain storage tank 24 and the connection angle θ2 so that the second mode can be executed.

### [Other embodiments]

The present invention is not limited to the above-described embodiments. Other embodiments of the present invention are described below.

### [Setting of vehicle speed]

In the target path generated in the second mode (see Fig. 15B), in a case where the angle θ1 formed between the first work path Rx and the second work path Ry is small (a case where the connection angle θ2 is large), the turning angle becomes large, and the combine 1 is likely to swing out when traveling on the connection portion. On the other hand, in a case where the angle θ1 formed between the first work path Rx and the second work path Ry is large (a case where the connection angle θ2 is small), the turning angle becomes small, and the combine 1 is less likely to swing out when traveling on the connection portion. In addition, in general, in a case of the turning travel, the combine 1 is more likely to swing out as the vehicle speed increases, and the combine 1 is less likely to swing out as the vehicle speed decreases.

Therefore, as another embodiment of the present invention, in a case where an operation control unit 31 (setting processing unit 311) sets to a second mode, the traveling speed (vehicle speed) of a combine 1 at a connection portion between a first work path Rx and a second work path Ry may be set according to an angle θ1 (connection angle θ2) formed between the first work path Rx and the second work path Ry. For example, the setting processing unit 311 sets the vehicle speed of the combine 1 at the connection portion to a lower speed as the connection angle θ2 becomes larger, and sets the vehicle speed of the combine 1 at the connection portion to a higher speed as the connection angle θ2 becomes smaller.

In addition, as another embodiment, in a case where the vehicle speed of the combine 1 at the connection portion is set to a low speed, the setting processing unit 311 may widen the allowable range of the connection allowable angle. For example, in a case where the vehicle speed of the combine 1 at the connection portion is set to a first speed, the setting processing unit 311 sets the upper limit angle of the allowable range to "10 degrees" (see Fig. 14A), and in a case where the vehicle speed of the combine 1 at the connection portion is set to a second speed lower than the first speed, the setting processing unit 311 sets the upper limit angle of the allowable range to" 20 degrees". As a result, an operator can set the connection allowable angle within the range of 5 degrees to 20 degrees.

### [Setting of overlap amount]

If the connection angle θ2 between the first work path Rx and the second work path Ry is large and the combine 1 swings out when traveling on the connection portion, a gap (unworked area) is created when the combine 1 works inside the connection portion.

Therefore, as another embodiment of the present invention, in a case where the mode is set to a second mode, an operation control unit 31 (setting processing unit 311) may set the overlap amount between the work width corresponding to a first work path Rx and a second work path Ry and the work width corresponding to a work path adjacent to the first work path Rx and the second work path Ry according to an angle θ1 (connection angle θ2) formed between the first work path Rx and the second work path Ry. For example, the setting processing unit 311 sets the default value of the overlap amount to 15 cm, sets the overlap amount to a value larger than 15 cm as the connection angle θ2 is larger, and sets the overlap amount to a value smaller than 15 cm as the connection angle θ2 is smaller. Note that, when the overlap amount is too large, there is a possibility that waste straw B1 (see Fig. 4C) is caught, so that the upper limit value (for example, 30 cm) of the overlap amount may be set. In addition, the setting processing unit 311 may set the overlap amount and the angle θ1 (connection angle θ2) formed between the first work path Rx and the second work path Ry based on the information of an already worked area (unworked area) so that there is no work left.

In addition, as another embodiment, a setting processing unit 311 may determine the overlap amount based on a connection angle θ2 and the vehicle speed. For example, the setting processing unit 311 may estimate the swing-out amount of a combine 1 at a connection portion based on the connection angle θ2 and the vehicle speed, and determine the overlap amount based on the estimated swing-out amount. In addition, the setting processing unit 311 may calculate the swing-out amount while the combine 1 is traveling, and correct a preset overlap amount based on the calculated swing-out amount.

In addition, as another embodiment, a setting processing unit 311 may determine the vehicle speed and the overlap amount based on a connection allowable angle d2 input (set) by an operator. For example, in a case where the operator inputs the connection allowable angle d2 in the range of 5 degrees to 10 degrees as the connection allowable angle d2, the setting processing unit 311 sets the vehicle speed and the overlap amount as default values. On the other hand, for example, in a case where the operator inputs the connection allowable angle d2 in the range of 10 degrees to 20 degrees as the connection allowable angle d2, the setting processing unit 311 sets the vehicle speed to a speed lower than the default value and sets the overlap amount to a value larger than the default value.

In addition, in a case where a combine 1 automatically travels by performing steering control so as to follow a target position (traveling target position and front gaze point) set forward (see [Setting of front gaze point] described later), when a front gaze point is set at a position away from the combine 1, a path for the steering control is switched to the second work path Ry early when the combine 1 moves from the first work path Rx to the second work path Ry. In this case, when the connection angle θ2 is large, the combine 1 travels inward at the connection portion between the first work path Rx and the second work path Ry, and a gap (unworked area) is likely to occur outside the connection portion. Similarly in this case, the setting processing unit 311 sets the overlap amount according to an angle θ1 (connection angle θ2) formed between the first work path Rx and the second work path Ry. In addition, the setting processing unit 311 may set the overlap amount according to the position of the front gaze point (front gaze distance).

In this manner, settable ranges of the connection allowable angle d2, the vehicle speed, and the overlap amount may be associated with each other. In this case, for example, in a case where the connection allowable angle d2 set by the operator exceeds the settable ranges of the corresponding vehicle speed and overlap amount, the setting processing unit 311 may prohibit the generation of a target path in a second mode and generate the target path in a first mode.

### [Setting of connection allowable angle]

In the above-described embodiment, the setting processing unit 311 sets the connection allowable angle d2 according to the input operation of the operator. However, as another embodiment, a setting processing unit 311 may automatically set a connection allowable angle d2 based on the vehicle speed set by an operator, may automatically set the connection allowable angle d2 based on the overlap amount set by the operator, or may automatically set the connection allowable angle d2 based on the vehicle speed and the overlap amount set by the operator.

In addition, in a case where the operator selects a turning method on a setting screen, the setting processing unit 311 may automatically set the connection allowable angle d2 based on the selected turning method (turning type). The turning method includes, for example, "standard" which is a standard turning method, "soft" which is a turning method in which the turning radius is larger than "standard", and "wet paddy" which is a turning method in which the turning radius is further larger than "soft". The setting processing unit 311 sets the connection allowable angle d2 (or allowable range) to a large value in a case where the operator selects "standard" as the turning method, and sets the connection allowable angle d2 (or allowable range) to a small value in a case where the operator selects "soft" or "wet paddy" as the turning method. As a result, in a case where "soft" or "wet paddy" is selected, the first mode is likely to be set (since the travel method of Fig. 15A is applied), and thus, it is easy to suppress the soil roughness of the field.

### [Setting of front gaze point]

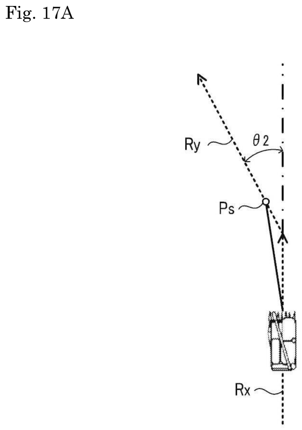

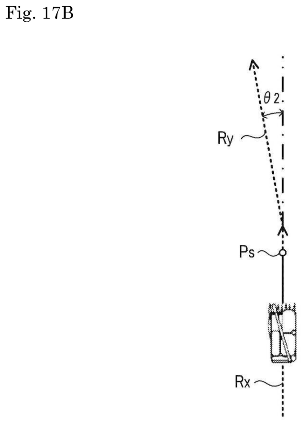

The combine 1 automatically travels on the target path by setting a target position (traveling target position and front gaze point) at a predetermined position separated from the current position by a predetermined distance in the traveling direction and performing steering control so as to follow the target position. In a case where the second mode is set, the vehicle control device 11 may set the predetermined distance (target position) according to the angle θ1 (connection angle θ2) formed between the first work path Rx and the second work path Ry. For example, in a case where the connection angle θ2 is large, the vehicle control device 11 sets a target position Ps at a position where the predetermined distance is long as shown in Fig. 17A. On the other hand, in a case where the connection angle θ2 is small, the vehicle control device 11 sets the target position Ps at a position where the predetermined distance is short as shown in Fig. 17B. When the target position Ps reaches a connection point of the first work path Rx and the second work path Ry, the combine 1 automatically travels so as to follow the target position Ps moving on the second work path Ry.

According to the above configuration, in a case where the connection angle θ2 is large (first mode) (see Fig. 17A), the target position Ps reaches the connection point of the first work path Rx and the second work path Ry early, and the target path is switched to the second work path Ry early. Therefore, the swing-out at the connection portion can be suppressed. In addition, in a case where the connection angle θ2 is small (second mode) (see Fig. 17B), the target position Ps slowly reaches the connection point of the first work path Rx and the second work path Ry, and the target path is slowly switched to the second work path Ry. Therefore, the combine 1 can travel with high positional accuracy with respect to the first work path Rx and the second work path Ry.

### [Another setting method of second mode]

As another embodiment, a setting processing unit 311 may determine whether to set the second mode based on the type of a work implement mounted on the work vehicle. For example, in a case where the work implement is the reaping unit or the mower of the present embodiment, the work (reaping and mowing) can be appropriately performed on the work object even if the work implement travels as shown in Fig. 15B. Therefore, when the work implement is the reaping unit or the mower, the setting processing unit 311 permits the setting to the second mode.

Meanwhile, in a case where the work implement is, for example, a sub-soiler, when the work implement travels as shown in Fig. 15B, the work implement excessively enters the soil, and the work accuracy is deteriorated. Therefore, in a case where the work implement is the sub-soiler, the setting processing unit 311 prohibits the setting to the second mode and permits only the setting to the first mode.

As another embodiment, a setting processing unit 311 may set the allowable range of a connection allowable angle d2 according to the type of a work implement. For example, the setting processing unit 311 sets the allowable range to a large range in a case where the work implement is a reaping unit or a mower having a small influence on the soil, and sets the allowable range to a small range in a case where the work implement is a tiller having a large influence on the soil.

### [Division of work path]

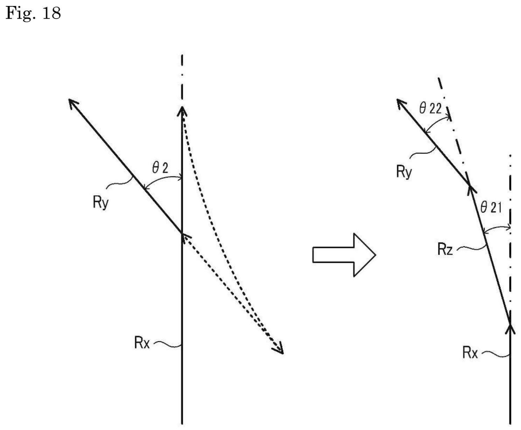

In a case where the connection angle θ2 between the first work path Rx and the second work path Ry exceeds the upper limit angle of the allowable range of the connection allowable angle d2, the generation processing unit 312 may generate a dividing path and generate the target path in the second mode. For example, as shown in Fig. 18, when the connection angle θ2 exceeds the upper limit angle (for example, 10 degrees), the setting processing unit 311 generates a dividing path Rz between the first work path Rx and the second work path Ry. As a result, a connection angle θ21 between the first work path Rx and the dividing path Rz and a connection angle θ22 between the second work path Ry and the dividing path Rz both fall within the allowable range of the connection allowable angle d2, and the target path can be generated in the second mode. Note that the setting processing unit 311 may generate the dividing path such that the connection angle θ21 and the connection angle θ22 are each an angle of 1/2 of the connection angle θ2.

Note that the setting processing unit 311 may set in advance the upper limit number of the number of dividing paths. In addition, the operator may be able to select whether to generate the dividing path.

### [Setting of discharge transition position]

The generation processing unit 312 may be able to set, on the target path, a discharge transition position for moving the combine 1 to the discharge position according to the storage amount in the grain storage tank 24 and causing the combine 1 to execute the discharge operation. For example, the generation processing unit 312 sets the discharge transition position at a position on a terminal side of each work path. However, the generation processing unit 312 may prohibit the setting of the discharge transition position on the terminal side of the first work path Rx (connection portion between the first work path Rx and the second work path Ry). As another embodiment, a generation processing unit 312 may permit the setting of a discharge transition position in a connection portion between a first work path Rx and a second work path Ry in a first mode (see Fig. 15A), and prohibit the setting of the discharge transition position in the connection portion between the first work path Rx and the second work path Ry in a second mode (see Fig. 15B).

In each of the above-described embodiments, although the combine 1 is given as an example of a work vehicle, the work vehicle of the present invention is not limited to the combine 1 and may be various work vehicles such as a tractor, a rice transplanter, or a construction machine. In addition, in each of the above-described embodiments, although the configuration has been described in which the work vehicle manually travels (manually steers) in the outermost peripheral area F0 and automatically travels (automatically steers) in the inner peripheral area F1, the present invention may have a configuration in which a work vehicle automatically travels (automatically steers) in both the outermost peripheral area F0 and the inner peripheral area F1.

### [Additional note of invention]

Hereinafter, an outline of the invention extracted from the above-described embodiments ([Generation method of inner peripheral path Rf (automatic travel path) (second configuration)]) will be additionally described. Note that configurations and processing functions, which are described in the following additional notes, can be selected and freely combined.

### <Additional note 1>

A path generation method for generating a target path including a first work path and a second work path following the first work path and causing a work vehicle to automatically travel, the path generation method including
in a case where an angle formed between the first work path and the second work path is larger than 90 degrees and smaller than 180 degrees, setting either one of a first mode for generating a target path including a backward path at a connection portion between the first work path and the second work path and a second mode for generating a target path not including the backward path at the connection portion.

### <Additional note 2>

The path generation method according to additional note 1, further including:
setting the first mode in a case where the formed angle is less than a predetermined angle; and
setting the second mode in a case where the formed angle is equal to or larger than the predetermined angle.

### <Additional note 3>

The path generation method according to additional note 2, in which
the predetermined angle is set according to an input operation of a user.

### <Additional note 4>

The path generation method according to any one of additional notes 1 to 3, further including
setting a traveling speed of the work vehicle at the connection portion according to the formed angle in a case where the second mode is set.

<Additional note 5>

The path generation method according to any one of additional notes 1 to 4, further including
setting an overlap amount between a work width corresponding to the first work path and the second work path and a work width corresponding to a work path adjacent to the first work path and the second work path according to the formed angle in a case where the second mode is set.

### <Additional note 6>

The path generation method according to additional note 5, further including
setting the overlap amount according to the formed angle and a traveling speed of the work vehicle preset by a user in a case where the second mode is set.

### <Additional note 7>

The path generation method according to any one of additional notes 1 to 6, further including
in a case where the work vehicle is caused to travel to follow a target position set at a predetermined position separated from a current position by a predetermined distance in a traveling direction,
setting the predetermined distance according to the formed angle in a case where the second mode is set.

### <Additional note 8>

The path generation method according to any one of additional notes 1 to 7, further including
determining whether to set the second mode based on a type of a work implement mounted on the work vehicle.

### <Additional note 9>

A path generation program for generating a target path including a first work path and a second work path following the first work path and causing a work vehicle to automatically travel, the path generation program for causing one or more processors to
in a case where an angle formed between the first work path and the second work path is larger than 90 degrees and smaller than 180 degrees, set either one of a first mode for generating a target path including a backward path at a connection portion between the first work path and the second work path and a second mode for generating a target path not including the backward path at the connection portion.

### <Additional note 10>

A path generation system for generating a target path including a first work path and a second work path following the first work path and causing a work vehicle to automatically travel, in which
in a case where an angle formed between the first work path and the second work path is larger than 90 degrees and smaller than 180 degrees, either one of a first mode for generating a target path including a backward path at a connection portion between the first work path and the second work path and a second mode for generating a target path not including the backward path at the connection portion, is set.

### <Additional note 11>

An automatic travel method for causing a work vehicle to automatically travel along a target path including a first work path and a second work path following the first work path, the automatic travel method including
in a case where an angle formed between the first work path and the second work path is larger than 90 degrees and smaller than 180 degrees, selecting either one of a first travel mode for causing the work vehicle to travel on a target path including a backward path at a connection portion between the first work path and the second work path and a second travel mode for causing the work vehicle to travel on a target path not including the backward path at the connection portion.

### LIST OF REFERENCE SIGNS

- 10: Traveling system
- 1: Combine (work vehicle)
- 11: Vehicle control device
- 15: Reaping unit (work implement)
- 111: Travel processing unit
- 112: Work processing unit
- 113: Registration processing unit
- 3: Operation terminal
- 31: Operation control unit
- 311: Setting processing unit
- 312: Generation processing unit
- 313: Output processing unit
- F: Field
- F0: Outermost peripheral area
- F1: Inner peripheral area
- Ps: Target position (front gaze point)
- R: Target path
- Re: Outermost peripheral path
- Rf: Inner peripheral path
- R1: Work path
- R11: Non-work path (backward path)
- R12: Non-work path (forward path)
- R2: Work path
- Ra: Work path (first work path)
- Rb: Work path (second work path)
- Rs1: Movement path
- Rx: First work path
- Ry: Second work path
- Rz: Dividing path
- d1: Connection allowable angle
- d2: Connection allowable angle
- θ1: Formed angle (formed between first work path and second work path)
- θ2: Connection angle

## Claims

1. A path generation method for generating a target path including a first work path and a second work path following the first work path and causing a work vehicle to automatically travel, the path generation method comprising
in a case where an angle formed between the first work path and the second work path is larger than 90 degrees and smaller than 180 degrees, setting either one of a first mode for generating a target path including a backward path at a connection portion between the first work path and the second work path and a second mode for generating a target path not including the backward path at the connection portion.

2. The path generation method according to claim 1, further comprising:
setting the first mode in a case where the formed angle is less than a predetermined angle; and
setting the second mode in a case where the formed angle is equal to or larger than the predetermined angle.

3. The path generation method according to claim 2, wherein
the predetermined angle is set according to an input operation of a user.

4. The path generation method according to claim 1, further comprising
setting a traveling speed of the work vehicle at the connection portion according to the formed angle in a case where the second mode is set.

5. The path generation method according to claim **1,** further comprising
setting an overlap amount between a work width corresponding to the first work path and the second work path and a work width corresponding to a work path adjacent to the first work path and the second work path according to the formed angle in a case where the second mode is set.

6. The path generation method according to claim 5, further comprising
setting the overlap amount according to the formed angle and a traveling speed of the work vehicle preset by a user in a case where the second mode is set.

7. The path generation method according to claim 1, further comprising
in a case where the work vehicle is caused to travel to follow a target position set at a predetermined position separated from a current position by a predetermined distance in a traveling direction,
setting the predetermined distance according to the formed angle in a case where the second mode is set.

8. The path generation method according to claim **1,** further comprising
determining whether to set the second mode based on a type of a work implement mounted on the work vehicle.

9. A path generation program for generating a target path including a first work path and a second work path following the first work path and causing a work vehicle to automatically travel, the path generation program for causing one or more processors to
in a case where an angle formed between the first work path and the second work path is larger than 90 degrees and smaller than 180 degrees, set either one of a first mode for generating a target path including a backward path at a connection portion between the first work path and the second work path and a second mode for generating a target path not including the backward path at the connection portion.

10. A path generation system for generating a target path including a first work path and a second work path following the first work path and causing a work vehicle to automatically travel, wherein
in a case where an angle formed between the first work path and the second work path is larger than 90 degrees and smaller than 180 degrees, either one of a first mode for generating a target path including a backward path at a connection portion between the first work path and the second work path and a second mode for generating a target path not including the backward path at the connection portion, is set.

11. An automatic travel method for causing a work vehicle to automatically travel along a target path including a first work path and a second work path following the first work path, the automatic travel method comprising
in a case where an angle formed between the first work path and the second work path is larger than 90 degrees and smaller than 180 degrees, selecting either one of a first travel mode for causing the work vehicle to travel on a target path including a backward path at a connection portion between the first work path and the second work path and a second travel mode for causing the work vehicle to travel on a target path not including the backward path at the connection portion.
